# EUROPEAN PATENT APPLICATION

(11) **EP 2 779 611 A1**
(43) Date of publication of application: **17.09.2014**
(21) Application number: 14152867.9
(22) Date of filing: 28.01.2014
(51) Int. Cl.: H04N 1/00, H04N 1/32, H04N 1/34

(54) **Transmission control system, transmission control method, and information processing device**

(30) Priority: 11.03.2013 JP 2013048378
(71) Applicant: Ricoh Company, Ltd., Tokyo 143-8555 (JP)
(72) Inventor: Akutsu, Toru, Tokyo, 143-8555 (JP)
(74) Representative: Schwabe - Sandmair - Marx

(57) **Abstract**

A transmission control system, which includes one or more devices for transmitting transmission data based on a transmission job received from an external device, includes an image processing unit configured to create, based on the received transmission job, the transmission data by performing image processing on image data included in the transmission job; a determining unit configured to determine whether the transmission job includes an instruction to make a confirmation whether to transmit the transmission data before transmitting the transmission data; a confirming unit configured to confirm with a user whether to transmit the created transmission data before transmitting the transmission data, when the instruction to make the confirmation is included in the transmission job; and a transmission control unit configured to transmit the transmission data when the user has confirmed to transmit the transmission data as a result of the confirmation by the confirming unit.

## Description

### BACKGROUND OF THE INVENTION

### 1. Field of the Invention

The present invention relates to a transmission control system, a transmission control method, and an information processing device.

### 2. Description of the Related Art

Conventionally, when an image forming apparatus such as an MFP (multifunction peripheral) is used for printing or copying, volume-based charging is performed according to the amount of paper and toner used.

In such volume-based charging, when there is a user (operator) actually performing the operation of printing and copying, and a requester requesting the operation to the operator, there are cases where the operator is charged, and a fee is not properly charged to the requester who is supposed to be charged for receiving the benefit of the printing operation.

Furthermore, as it now stands, there are cases where a fee is not charged for the amount of paper and toner used, but for a service including a combination of processes such as transmitting an e-mail of a scan image obtained by scanning a paper document and PDF (Portable Document Format) conversion.

However, in a service including a combination of processes, there may be cases where a process is executed in a manner that does not comply with the user's intentions, and a fee is charged for the service even though a process has been executed in a manner that does not comply with the user's intentions.

Accordingly, Patent Document 1 discloses a technology for charging the usage fee based on the executed job, for the purpose of charging an appropriate usage fee according to the type and contents of the used service.

Patent Document 1: Japanese Laid-Open Patent Publication No. 2002-330253

However, the technology described in Patent Document 1 does not solve the following problems. For example, there are cases where the output result of using the service is not what the user had assumed, which is caused by an erroneous operation by the user. Furthermore, there are cases where the user uses the service in an unintentional manner, such as using the service excessively. Furthermore, when there is an operator and a requester, there may be cases where the fee is charged to the operator who performed the operation for using the service, and the fee is not properly and fairly charged.

The present invention has been made in view of the above, and an object of the present invention is to appropriately execute a service intended by a user.

### SUMMARY OF THE INVENTION

The present invention provides a transmission control system, a transmission control method, and an information processing device, in which one or more of the above-described disadvantages are eliminated.

According to an aspect of the present invention, there is provided a transmission control system including one or more devices for transmitting transmission data based on a transmission job received from an external device, the transmission control system including an image processing unit configured to create, based on the received transmission job, the transmission data by performing image processing on image data included in the transmission job; a determining unit configured to determine whether the transmission job includes an instruction to make a confirmation as to whether to transmit the transmission data before transmitting the transmission data; a confirming unit configured to confirm with a user whether to transmit the created transmission data before transmitting the transmission data, when the instruction to make the confirmation is included in the transmission job; and a transmission control unit configured to transmit the transmission data when the user has confirmed to transmit the transmission data as a result of the confirmation by the confirming unit.

According to an aspect of the present invention, there is provided a transmission control method executed by one or more devices included in a transmission control system for transmitting transmission data based on a transmission job received from an external device, the transmission control method including creating, based on the received transmission job by the one or more devices, the transmission data by performing image processing on image data included in the transmission job; determining, by the one or more devices, whether the transmission job includes an instruction to make a confirmation whether to transmit the transmission data before transmitting the transmission data; confirming with a user, by the one or more devices, as to whether to transmit the created transmission data before transmitting the transmission data, when the instruction to make the confirmation is included in the transmission job; and transmitting, by the one or more devices, the transmission data when the user has confirmed to transmit the transmission data as a result of the confirming.

According to an aspect of the present invention, there is provided an information processing device for transmitting transmission data based on a transmission job received from an external device, the information processing device including an image processing unit configured to create, based on the received transmission job, the transmission data by performing image processing on image data included in the transmission job; a determining unit configured to determine whether the transmission job includes an instruction to make a confirmation as to whether to transmit the transmission data before transmitting the transmission data; a confirming unit configured to confirm with a user whether to transmit the created transmission data before transmitting the transmission data, when the instruction to make the confirmation is included in the transmission job; and a transmission control unit configured to transmit the transmission data when the user has confirmed to transmit the transmission data as a result of the confirmation by the confirming unit.

### BRIEF DESCRIPTION OF THE DRAWINGS

Other objects, features and advantages of the present invention will become more apparent from the following detailed description when read in conjunction with the accompanying drawings, in which:
FIG. 1 is a configuration diagram of an example of a transmission system according to an embodiment of the present invention;
FIGS. 2A through 2C illustrate an example of an overview of operations of a transmission system according to the embodiment of the present invention;
FIG. 3 is a hardware configuration diagram of an example of a computer system according to the embodiment of the present invention;
FIG. 4 illustrates a hardware configuration of an example of an image forming apparatus according to the embodiment of the present invention;
FIGS. 5A and 5B illustrate an example of a functional configuration of a transmission system according to the embodiment of the present invention;
FIG. 6 illustrates an example of information stored in a log information storage unit of an image forming apparatus according to the embodiment of the present invention;
FIG. 7 illustrates an example of information stored in a project information storage unit of a transmission control server according to the embodiment of the present invention;
FIG. 8 illustrates an example of information stored in a job process status storage unit of a transmission control server according to the embodiment of the present invention;
FIG. 9 illustrates an example of a request source confirmation mail according to the embodiment of the present invention;
FIG. 10 illustrates an example of information stored in a job operation information storage unit of a management server according to the embodiment of the present invention;
FIG. 11 illustrates an example of information stored in a user information storage unit of a management server according to the embodiment of the present invention;
FIG. 12 illustrates an example of information stored in an authentication information storage unit of an authentication server according to the embodiment of the present invention;
FIG. 13 illustrates an example of information stored in a charge information storage unit of a charging server according to the embodiment of the present invention;
FIG. 14 illustrates an example of a transmission process execution confirmation screen according to the embodiment of the present invention;
FIG. 15 is a sequence diagram of an example of operation procedures of a log in process of a transmission system according to the embodiment of the present invention;
FIG. 16 illustrates an example of a transmission service usage screen displayed on an image forming apparatus according to the embodiment of the present invention, and screen transition;
FIG. 17 is a sequence diagram illustrating an example of operation procedures of a transmission service execution process (when pre-transmission confirmation process content is not specified) of a transmission system according to the embodiment of the present invention;
FIG. 18 is a sequence diagram illustrating an example of operation procedures of a transmission service execution process (when preview display is specified as pre-transmission confirmation process content) of a transmission system according to the embodiment of the present invention;
FIG. 19 is a sequence diagram (part 1) illustrating an example of operation procedures of a transmission service execution process (when confirmation of request source is specified as pre-transmission confirmation process content) of a transmission system according to the embodiment of the present invention;
FIG. 20 is a sequence diagram (part 2) illustrating an example of operation procedures of a transmission service execution process (when confirmation of request source is specified as pre-transmission confirmation process content) of a transmission system according to the embodiment of the present invention;
FIGS. 21A and 21B are a flowchart illustrating an example of process procedures of a transmission control server according to the embodiment of the present invention;
FIG. 22 is a sequence diagram of an example of operation procedures of a charging process of a transmission system according to the embodiment of the present invention;
FIGS. 23A and 23B are configuration diagrams of examples of a transmission system according to a modification of the embodiment of the present invention;
FIG. 24 illustrates an example of a log in screen displayed on an image forming apparatus according to the modification of the embodiment of the present invention;
FIG. 25 illustrates an example of information stored in an authentication information storage unit of an authentication server according to the modification of the embodiment of the present invention;
FIG. 26 is a sequence diagram (part 1) illustrating an example of operation procedures of a transmission service execution process of a transmission system according to the modification of the embodiment of the present invention (in a case where the request source confirmation is specified in the pre-transmission confirmation process contents);
FIG. 27 is a sequence diagram (part 2) illustrating an example of operation procedures of a transmission service execution process of a transmission system according to the modification of the embodiment of the present invention (in a case where the request source confirmation is specified in the pre-transmission confirmation process contents); and
FIG. 28 illustrates an example of a transmission process execution confirmation screen according to the modification of the embodiment of the present invention.

### DETAILED DESCRIPTION OF THE PREFERRED EMBODIMENTS

A description is given, with reference to the accompanying drawings, of embodiments of the present invention.

### System configuration

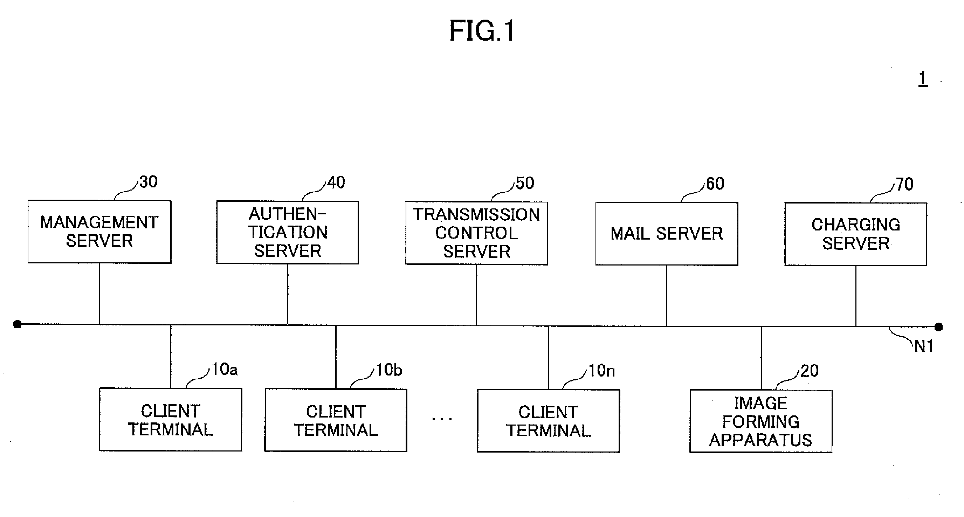

FIG. 1 is a configuration diagram of an example of a transmission system according to an embodiment of the present invention. A transmission system 1 includes client terminals 10a, 10b, ··· 110n (referred to as "client terminal 10" when not distinguished), an image forming apparatus 20, a management server 30, an authentication server 40, a transmission control server 50, a mail server 60, and a charging server 70, which are connected to a network N1 such as a wired or wireless LAN (Local Area Network). Note that a system having the functions executed by the management server 30, the authentication server 40, the transmission control server 50, and the charging server 70 is referred to as a transmission control system.

The transmission system 1 according to the embodiment of the present invention is a system for transmitting transmission data based on a transmission job (hereinafter, simply referred to as a "job"). The transmission system 1 is a system for transmitting, to a specified predetermined folder or mail address, a transmission document (transmission data). The transmission document is created by performing a predetermined process on a scan document performed by the transmission control server 50, which has received a job including the scan document obtained by scanning a paper document with the image forming apparatus 20. A predetermined process performed on the scan document is, for example, a series of processes for performing a conversion in the file format (for example, PDF conversion) after performing OCR (Optical Character Reader) on the scan document. In the embodiment of the present invention, a predetermined process performed on a scan document and a process of transmitting the transmission document performed by the transmission control server 50, are referred to as a transmission service. Furthermore, the specific process contents of a predetermined process performed on a scan document and a process of transmitting the transmission document, are defined as a project, and the transmission control server 50 stores the process contents of each project. That is to say, when the user specifies the project which he desires to execute, the transmission control server 50 executes a process in accordance with the specified project. Then, before the transmission control server 50 transmits the transmission document, the transmission system 1 controls the execution of the transmission process by causing the image forming apparatus 20 to display a preview image of the transmission document and prompting a user to confirm the execution of the transmission process of the transmission document. Note that the preview image of the transmission document may be generated by performing a process of changing (reducing) the resolution and performing a process of preventing copying and screen capturing, on the transmission document that has undergone the predetermined process at the transmission control server 50. Furthermore, a tint image may be included in the preview image. Then, the transmission control server 50 of the transmission system 1 controls the transmission of the transmission document, based on the confirmation result of whether to execute the transmission process.

The client terminal 10 is an example of a terminal device, and is an information processing device (computer system) in which a general OS (Operating System) is installed. The client terminal 10 is not limited to a particular device, as long as a software program can be installed and executed and a communication function is included. Specific examples of the client terminal 10 are a non-portable information processing device such as a desktop PC (Personal Computer), and a portable information processing device such as a notebook PC, a smartphone, a tablet terminal, and a mobile phone.

The image forming apparatus 20 is an example of an output device. The image forming apparatus 20 has a wireless or wireless communication function. The image forming apparatus 20 is a multifunction peripheral (MFP) including a scanner device including a CCD (Charged Coupled Device) sensor. The image forming apparatus 20 sends, to the transmission control server 50 via the network N1, image data (scan document) obtained by scanning a document with the built-in scanner device. Furthermore, the image forming apparatus 20 displays a preview image sent from the transmission control server 50 on an operation panel of the image forming apparatus 20, and requests the management server 30 to perform mail transmission in order to confirm the execution of a job.

The management server 30 is an information processing device that is an example of a management device. The management server 30 manages transmission services used by the image forming apparatus 20. Specifically, when an authentication request is received from the image forming apparatus 20, the management server 30 causes the authentication server 40 to execute an authentication process. Furthermore, the management server 30 causes the mail server 60 to execute mail transmission based on a request from the image forming apparatus 20. Furthermore, the management server 30 manages the operation state of a job executed in the transmission control server 50, and receives an instruction from the client terminal 10 to continue a process of a job that has been discontinued. Furthermore, the management server 30 stores a user (user name) and the address information of the user (for example, an e-mail address) in association with each other.

The authentication server 40 is an example of an authentication device. The authentication server 40 receives an authentication request from the image forming apparatus 20 via the management server 30, and performs an authentication process based on the authentication information (user name, password, etc.) held by the authentication server 40.

The transmission control server 50 is an information processing device for executing a transmission service. The transmission control server 50 manages information relevant to a project for executing a transmission service, and executes a process based on a project specified with respect to a scan document that is the transmission object. Furthermore, the transmission control server 50 manages the process state of a job for which a process has been executed based on the project. The transmission control server 50 generates a preview image of a distribution document, and sends the preview image to the image forming apparatus 20.

The mail server 60 is an information processing device for transferring e-mails. For example, e-mails having a predetermined destination address sent from the management server 30 based on a request from the image forming apparatus 20, are accumulated in the mail server 60 and sent to the destination address.

The charging server 70 is an information processing device for performing a charging process on the transmission service.

Note that the management server 30, the authentication server 40, the transmission control server 50, the mail server 60, and the charging server 70 illustrated in FIG. 1 may be integrated in a single computer, or the functions may be distributed across more than one computers.

### Overview of System Operation

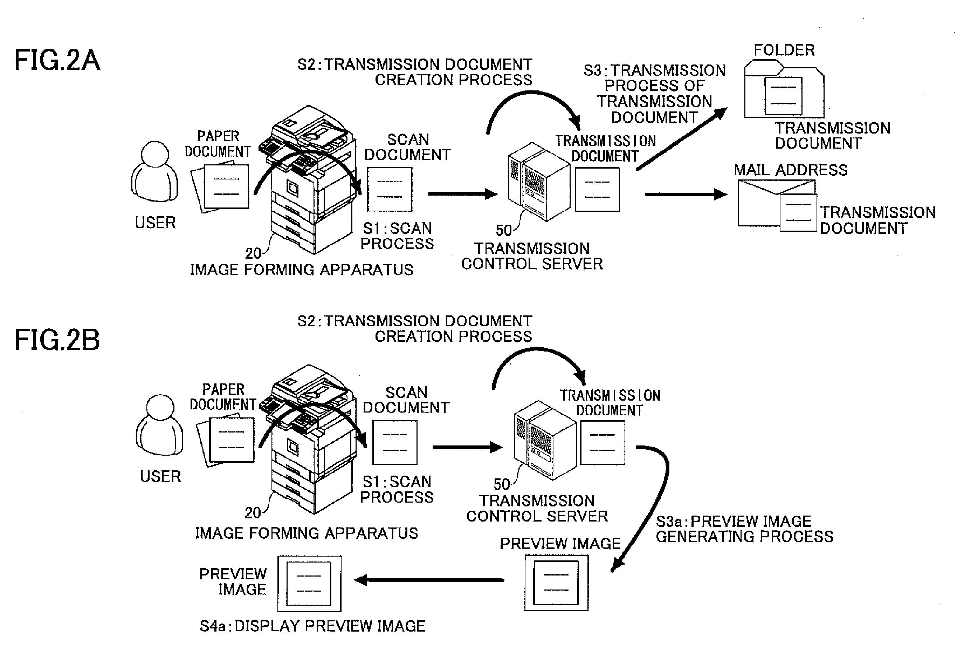

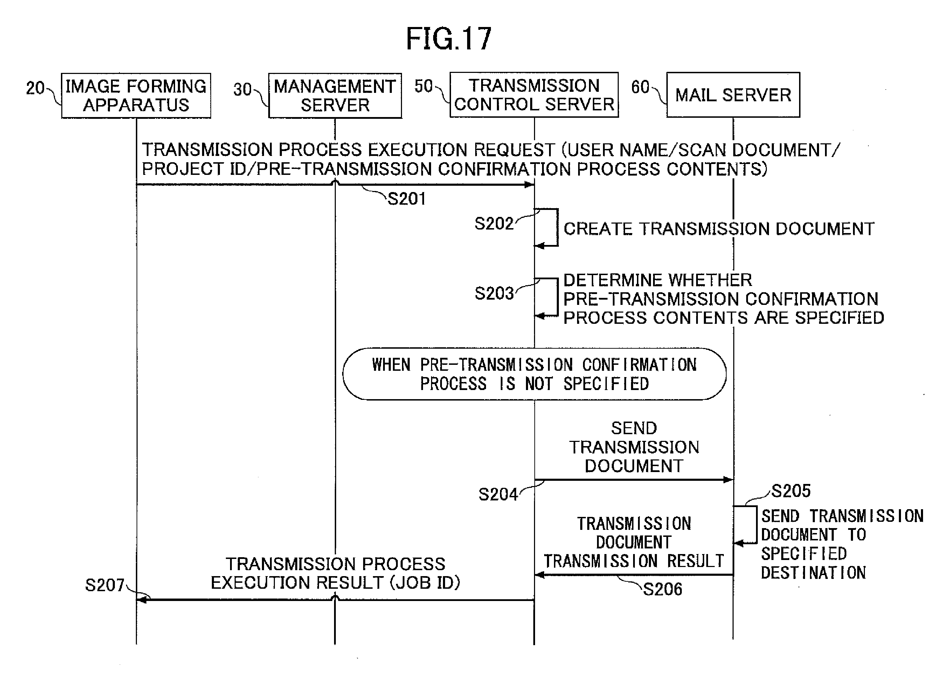

Next, a description is given of an overview of operations of the transmission system 1 according to the embodiment of the present invention. FIGS. 2A through 2C illustrate an example of an overview of operations of the transmission system 1 according to the embodiment of the present invention. Note that detailed procedures of the operations of the transmission system 1 are described below with reference to FIGS. 17 through 21.

FIG. 2A illustrates an overview of the basic operations of a transmission service executed by the transmission system 1. As illustrated in FIG. 2A, first, the user uses the image forming apparatus 20 to scan a paper document (step S1). Next, a scan document obtained by the scanning is sent from the image forming apparatus 20 to the transmission control server 50, and the transmission control server 50 performs a predetermined process on the scan document and creates a transmission document (step S2). Then, the transmission control server 50 sends the transmission document to a folder in a file server or a mail address that has been specified by the user in advance (step S3). The above processes are an overview of the basic operations for executing a transmission service by the transmission system 1.

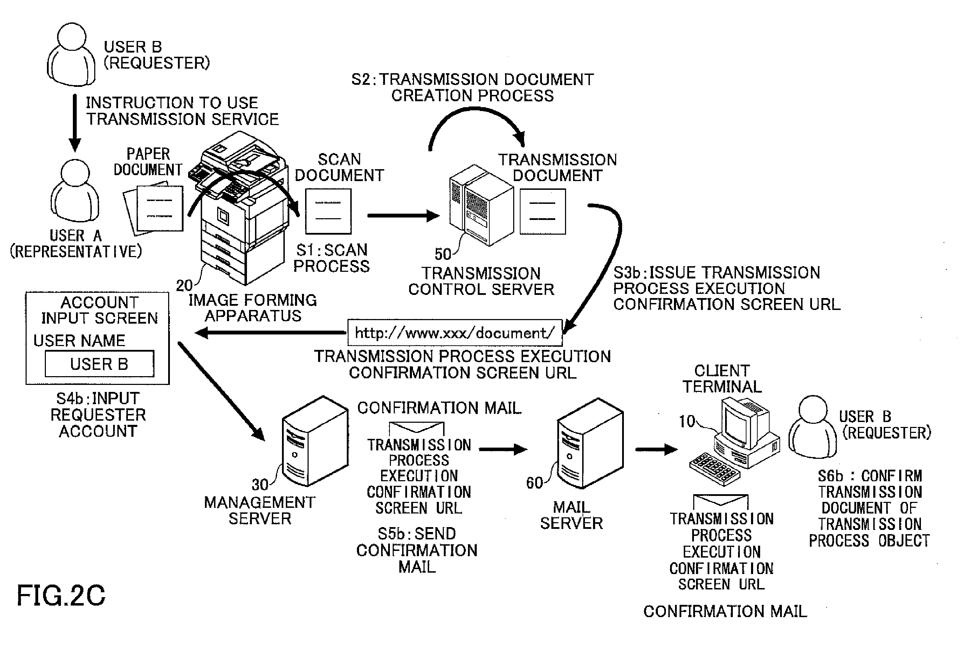

FIGS. 2B and 2C illustrate an overview of operations in a case of executing a process of confirming with the user before the transmission document is transmitted (referred to as a "pre-transmission confirmation process,").

FIG. 2B illustrates procedures performed at the image forming apparatus 20 for confirming a preview image of a transmission document, before the transmission process is performed by the transmission system 1.

The steps up to step S2 in FIG. 2B are the same as those of FIG. 2A. When the transmission document is created (step S2), and preview display has been instructed by the user in advance, the transmission control server 50 generates a preview image based on the transmission document (step S3a), and sends the preview image to the image forming apparatus 20. Then, the image forming apparatus 20 displays the received preview image on a display device such as an operation panel (step S4a). Accordingly, the user can instruct the execution of the transmission process upon confirming the contents of the transmission document.

FIG. 2C illustrates procedures of prompting the requester who requested the transmission service to confirm the execution of the transmission process, before the transmission process is performed by the transmission system 1. In FIG. 2C, first, for example a user B (requester) requests usage of a transmission service to a user A (representative). Procedures of the next steps S1 and S2 are the same as those of FIG. 2A. When the transmission document is created (step S2), and confirmation to the request source has been instructed by the user in advance, the transmission control server 50 issues a URL (transmission process execution confirmation screen URL) for causing a user B, who is the requester, to confirm the execution of the transmission process for this transmission document (step S3b). Next, when the transmission process execution confirmation screen URL is sent from the transmission control server 50 to the image forming apparatus 20, the image forming apparatus 20 displays an account input screen of the requester, and receives an input of an account of the requester (user B) by the user A who is the representative (step S4b). When the account (user name) of the requester (user B) is notified from the image forming apparatus 20 to the management server 30, the management server 30 sends a confirmation mail in which the transmission process execution confirmation screen URL is displayed in, for example, the main text of the mail, to the mail address of the user B via the mail server 60 (step S5b). Then, the user B clicks the transmission process execution confirmation screen URL included in the confirmation mail sent to the mail address of the user B, to display a screen indicating the transmission document that is the transmission process object (step S6b). Subsequently, when the user B confirms that the transmission document displayed in the screen is based on the request of the user B, the user B instructs to continue the transmission process. Furthermore, when a fee is charged for the transmission service, the user who is charged is changed to the user B who is the requester, instead of the user A who is the representative. Accordingly, even when the user (representative) performing the operations for using the transmission service and the user (requester) instructing to use the transmission service are different, the transmission document can be transmitted upon obtaining permission from the requester. Furthermore, in such a case, the fee can be properly charged to the user who benefits from the transmission service.

### Hardware Configuration

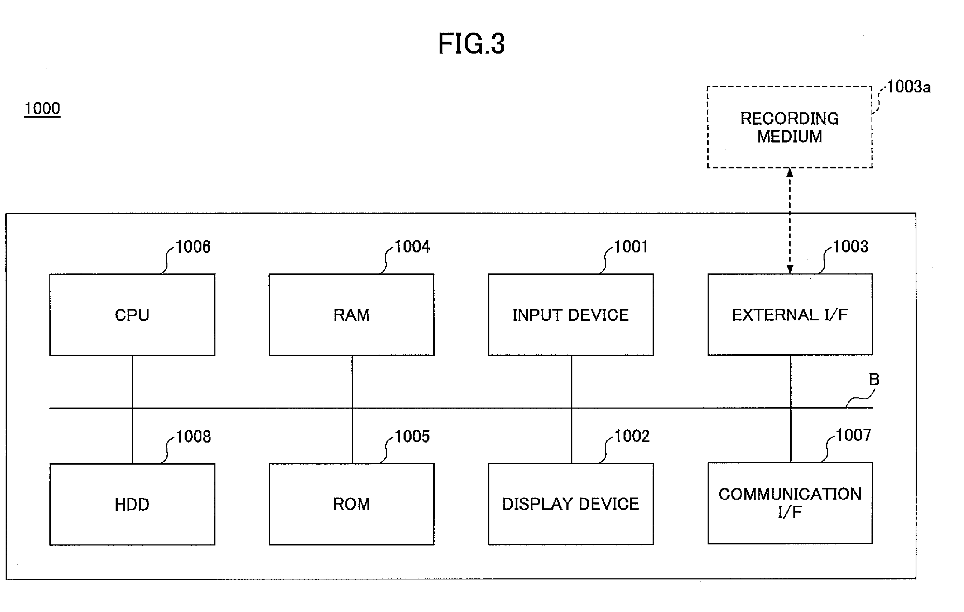

The client terminal 10, the management server 30, the authentication server 40, the transmission control server 50, the mail server 60, and the charging server 70 illustrated in FIG. 1 are realized by a computer system having a hardware configuration, for example, as illustrated in FIG. 3. FIG. 3 is a hardware configuration diagram of an example of a computer system according to the embodiment of the present invention.

A computer system 1000 illustrated in FIG. 3 includes an input device 1001, a display device 1002, an external I/F 1003, a RAM (Random Access Memory) 1004, a ROM (Read-Only Memory) 1005, a CPU (Central Processing Unit) 1006, a communication I/F 1007, and a HDD (Hard Disk Drive) 1008, which are interconnected by a bus B.

The input device 1001 includes a keyboard, a mouse, and a touch panel, which are used by the user for inputting operation signals. The display device 1002 includes a display, etc., and displays processing results obtained by the computer system 1000.

The communication I/F 1007 is an interface for connecting the computer system 1000 to the network N1 or N2. Accordingly, the computer system 1000 can perform data communication via the communication I/F 1007.

The HDD 1008 is a nonvolatile storage device storing programs and data. Examples of the stored programs and data are an OS (Operating System) which is the basic software for controlling the entire computer system 1000, and application software for providing various functions in the OS. The HDD 1008 manages the stored programs and data by a predetermined file system and/or a DB (database).

The external I/F 1003 is an interface between the computer system 1000 and an external device. An example of the external device is a recording medium 1003a. Accordingly, the computer system 1000 can read data from and/or write data in the recording medium 1003a via the external I/F 1003. Examples of the recording medium 1003a are a flexible disk, a CD (Compact Disk), a DVD (Digital Versatile Disk), an SD Memory card, and a USB memory (Universal Serial Bus memory).

The ROM 1005 is a nonvolatile semiconductor memory (storage device) that can hold programs and data even after the power is turned off. The ROM 1005 stores programs and data such as BIOS (Basic Input/Output System) that is executed when the computer system 1000 is activated, OS settings, and network settings. The RAM 1004 is a volatile semiconductor memory (storage device) for temporarily storing programs and data.

The CPU 1006 is a processor for loading the programs and data from storage devices such as the ROM 1005 and the HDD 1008 into the RAM 1004, and executing processes, to control the entire computer system 1000 and implement functions.

The client terminal 10, the management server 30, the authentication server 40, the transmission control server 50, the mail server 60, and the charging server 70 according to the embodiment of the present invention can realize various process as described below, according to the hardware configuration of the computer system 1000.

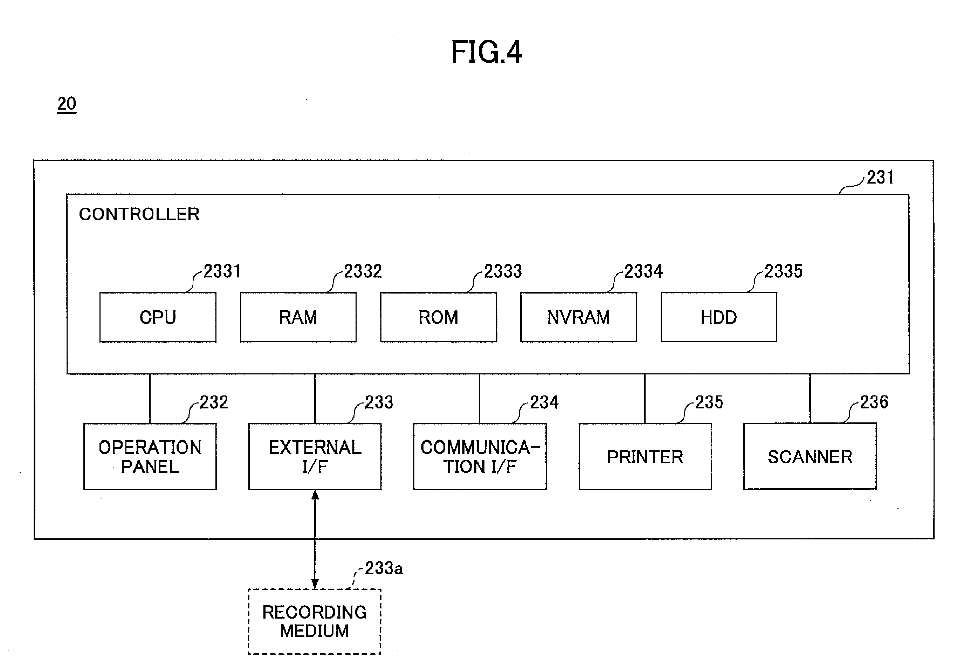

FIG. 4 illustrates a hardware configuration of an example of an image forming apparatus according to the embodiment of the present invention. The image forming apparatus 20 illustrated in FIG. 4 includes a controller 231, an operation panel 232, an external I/F 233, a communication I/F 234, a printer 235, and a scanner 236.

The controller 231 includes a CPU 2331, a RAM 2332, a ROM 2333, a NVRAM 2334, and a HDD 2335. The ROM 2333 stores various programs and data. The RAM 2332 temporarily holds programs and data. The NVRAM 2334 stores, for example, setting information. Furthermore, the HDD 2335 stores various programs and data.

The CPU 2331 loads programs, data, and setting information, etc. from the ROM 2333, the NVRAM 2334, and the HDD 2335 into the RAM 2332, and executes processes, to control the entire image forming apparatus 20 and implement functions.

The operation panel 232 includes an input unit for receiving input from a user and a display unit for displaying information. The external I/F 233 is an interface between the image forming apparatus 20 and an external device. An example of the external device is a recording medium 233a. Accordingly, the image forming apparatus 20 can read data from and/or write data in the recording medium 233a via the external I/F 233. Examples of the recording medium 233a are an IC card, a flexible disk, a CD, a DVD, an SD memory card, and a USB memory.

The communication I/F 234 is for connecting the image forming apparatus 20 to the network N1. Accordingly, the image forming apparatus 20 can perform data communication via the communication I/F 234.

The printer 235 is a printing device for printing print data onto a sheet. The scanner 236 is a scanning device for scanning image data from an original document.

The image forming apparatus 20 according to the embodiment of the present invention can realize various processes as described below, by the above hardware configuration.

### Functional Configuration

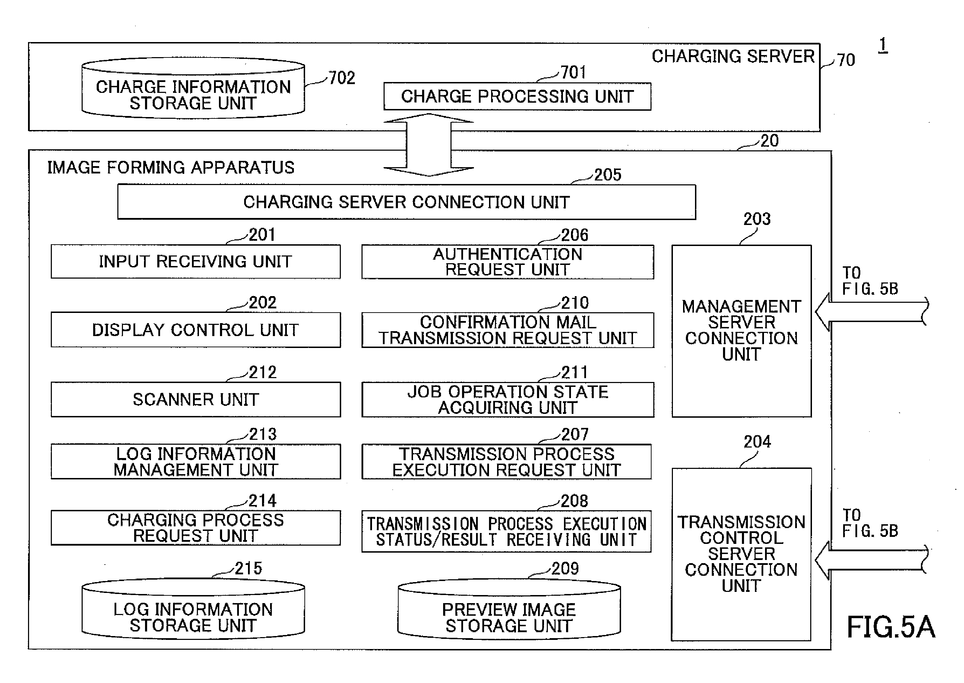

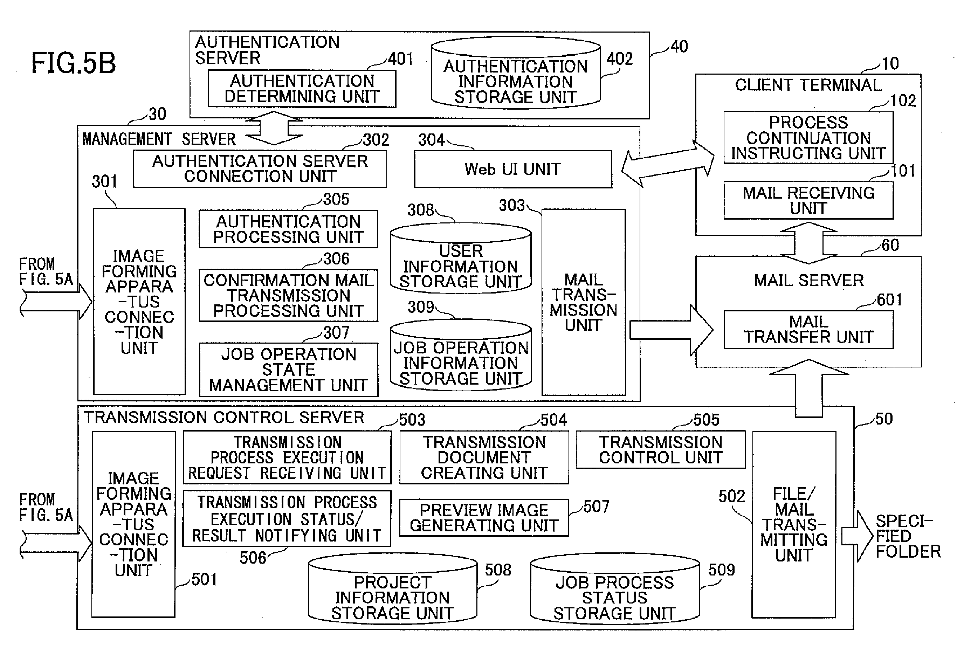

FIGS. 5A and 5B illustrate an example of a functional configuration of the transmission system 1 according to the embodiment of the present invention.

### Image Forming Apparatus

The image forming apparatus 20 includes an input receiving unit 201, a display control unit 202, a management server connection unit 203, a transmission control server connection unit 204, a charging server connection unit 205, an authentication request unit 206, a transmission process execution request unit 207, a transmission process execution status/result receiving unit 208, a preview image storage unit 209, a confirmation mail transmission request unit 210, a job operation state acquiring unit 211, a scanner unit 212, a log information management unit 213, a charging process request unit 214, and a log information storage unit 215. The respective functions are realized as the CPU 2331 executes programs and cooperates with the hardware.

The input receiving unit 201 controls the operation panel 232, and receives input according to user operations such as touch panel contact operations and keyboard input operations. For example, the input receiving unit 201 receives, from the user, input of authentication information such as a user ID and a password, and a specification of a project for using the transmission service.

The display control unit 202 controls the operation panel 232, and performs display output of information to the user. For example, the display control unit 202 displays a UI (User Interface) screen for using a transmission service, and displays a preview image of the transmission document. Note that when the image forming apparatus 20 has an externally connected display, the display control unit 202 may display the information on the display.

The management server connection unit 203 controls the communication I/F 234, and transmits/receives data with the management server 30.

The transmission control server connection unit 204 controls the communication I/F 234, and transmits/receives data with the transmission control server 50.

The charging server connection unit 205 controls the communication I/F 234, and transmits/receives data with the charging server 70.

The authentication request unit 206 makes an authentication request for the user to use the transmission service. Specifically, the authentication request unit 206 generates an authentication request based on a user name and a password which are authentication information notified from the input receiving unit 201, and sends the generated authentication request to the authentication server 40 via the management server 30. Then, when an authentication request response including the authentication result is received, the authentication request unit 206 displays the information indicating the authentication result on the display control unit 202. Note that the authentication process is not limited to password authentication; IC card authentication or biometric authentication may be performed.

The transmission process execution request unit 207 requests the transmission control server 50 to execute a process of transmitting a scan document obtained by scanning a paper document by the scanner unit 212 described below. Specifically, when a scan document that is a transmission object is generated after the user specifies the project to be executed in the transmission service and the confirmation process contents before transmission, the transmission process execution request unit 207 sends, to the transmission control server 50, a transmission process execution request including the scan document, a product ID identifying the specified project, and information indicating the confirmation process contents before transmission. Furthermore, when an instruction to continue a job whose process has been discontinued is received from the job operation state acquiring unit 211, the transmission process execution request unit 207 sends, to the transmission control server 50, a transmission process continuation request including the user name of the request source and a job ID.

The transmission process execution status/result receiving unit 208 receives, from the transmission control server 50, an execution status and an execution result of the transmission process performed on the scan document. When the transmission process execution status/result receiving unit 208 receives a transmission document creation result indicating the execution status of the transmission process, and a preview image is included in the transmission document creation result, the transmission process execution status/result receiving unit 208 stores the preview image in the preview image storage unit 209 and requests the display control unit 202 to execute a process of displaying the preview image. Furthermore, when the transmission document creation result includes a transmission process execution confirmation screen URL including information of a job whose transmission process is discontinued in the transmission control server 50, the transmission process execution status/result receiving unit 208 notifies this transmission process execution confirmation screen URL to the confirmation mail transmission request unit 210 described below, and causes the display control unit 202 to display the request source account input screen. Furthermore, when the transmission process execution status/result receiving unit 208 receives the transmission process execution result, the transmission process execution status/result receiving unit 208 outputs the transmission process execution result to the log information management unit 213.

The preview image storage unit 209 stores the preview image generated by the transmission control server 50.

The confirmation mail transmission request unit 210 requests the management server 30 to send a confirmation mail for inquiring the user who is the requester that instructed the execution of the transmission process, whether to execute (continue) the job whose transmission process is discontinued in the transmission control server 50. Specifically, when the transmission process execution confirmation screen URL is notified from the transmission process execution status/result receiving unit 208, the confirmation mail transmission request unit 210 temporarily stores the transmission process execution confirmation screen URL in a memory, etc., and waits for an instruction to be input by the user in a request source account input screen. Then, when the user name or the mail address of the requester input by the user is notified via the input receiving unit 201, the confirmation mail transmission request unit 210 makes a request to send a confirmation mail including the transmission process execution confirmation screen URL and the user name or the mail address of the requester.

The job operation state acquiring unit 211 performs polling with respect to the management server 30 at a predetermined cycle (for example, at a 60 second cycle), and performs an inquiry concerning the operation state of the job of the transmission process object. Inquiring the operation state of the job means to inquire whether the process of the job that is the transmission process object is discontinued, and whether an instruction to continue the process has been given for the discontinued job. In this case, when information indicating to continue the process of the discontinued job is acquired, the job operation state acquiring unit 211 instructs the transmission process execution request unit 207 to continue the transmission process.

The scanner unit 212 executes a scan process on a paper document, and generates a scan document that is the object of the transmission process. As a user operates the operation panel 232, the scanner unit 212 causes the scanner 236 to scan an original document and generate a scan image by performing image correction processes such as level correction, gamma correction, and edge processing, and A/D conversion.

The log information management unit 213 manages a log relevant to the usage of a transmission service with the use of the log information storage unit 215.

The charging process request unit 214 makes a charging process request including log information to the charging server, when the log information management unit 213 completes storing the information indicating the transmission process result in the log information storage unit 215.

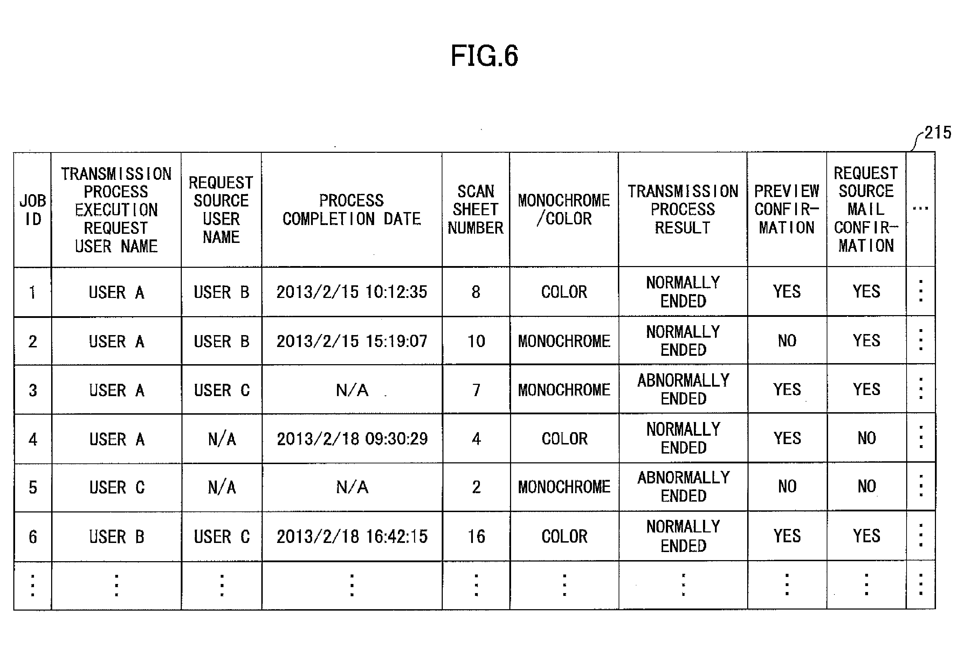

The log information storage unit 215 stores a log relevant to the usage of the transmission service. FIG. 6 illustrates an example of information stored in the log information storage unit 215 of the image forming apparatus 20 according to the embodiment of the present invention. As illustrated in FIG. 6, the log information storage unit 215 includes a "job ID", a "distribution process execution request user name", a "request source user name", a "process completion date", a "scan sheet number", "monochrome/color", "transmission process result", "preview confirmation", and "request source mail confirmation". The "job ID" is identification information assigned to each document that is an object of the transmission process (each job based on the transmission process execution result), and is a number that is uniquely applied in the transmission control server 50. The "distribution process execution request user name" is a user name of the user who made the distribution process execution request, and who has logged in to the image forming apparatus 20. The "request source user name" is the user name of the user who has made a request to the user who has made the transmission process execution request, when there is such a user. The "process completion date" is the process completion date when the image forming apparatus 20 has received the transmission process result, and is information indicating the year/month/date/minutes/seconds. "Scan sheet number" is the number of sheets of the paper document that have undergone a scan process. "Monochrome/color" is information indicating either monochrome or color in the scan process. The "transmission process result" is information included in the transmission process result, in which "normally (properly) ended" or "abnormally ended" is set, for example. When the "transmission process result" is "normally ended", the job is a charging object, and when the "transmission process result" is "abnormally ended", the job is not charged. "Preview confirmation" is information indicating whether the user has confirmed a preview image; "yes" is set when the user has confirmed the preview image and "no" is set when the user has not confirmed the preview image. "Request source mail confirmation" is information indicating whether a confirmation mail has been sent to the requester; "yes" is set when a confirmation mail has been sent to the requester and "no" is set when a confirmation mail has not been sent to the requester.

### Transmission Control Server

The transmission control server 50 includes an image forming apparatus connection unit 501, a file/mail transmitting unit 502, a transmission process execution request receiving unit 503, a transmission document creating unit 504, a transmission control unit 505, a transmission process execution status/result notifying unit 506, a preview image generating unit 507, a project information storage unit 508, and a job process status storage unit 509. The respective functions are realized as the CPU executes programs and cooperates with the hardware.

The image forming apparatus connection unit 501 controls the communication I/F 1007, and sends and receives data with the image forming apparatus 20.

The file/mail transmitting unit 502 controls the communication I/F 1007, and transmits a transmission document to a specified folder with the use of FTP (File Transfer Protocol), and transmits a mail to which the transmission document is attached, to a specified destination mail address with the use of SMTP (Simple Mail Transfer Protocol).

The transmission process execution request receiving unit 503 receives a transmission process execution request sent from the image forming apparatus 20, and requests the transmission document creating unit 504 to create a transmission document based on the scan document and the project ID included in the transmission process execution request. Note that the transmission process execution request includes the user name and information indicating contents of the specified pre-transmission confirmation process contents (preview display, request source confirmation), other than the scan document and the project ID. Furthermore, the transmission process execution request receiving unit 503 receives a transmission process continuation request, and requests the transmission control unit 505 to continue the transmission process of the job corresponding to the job ID included in the transmission process continuation request.

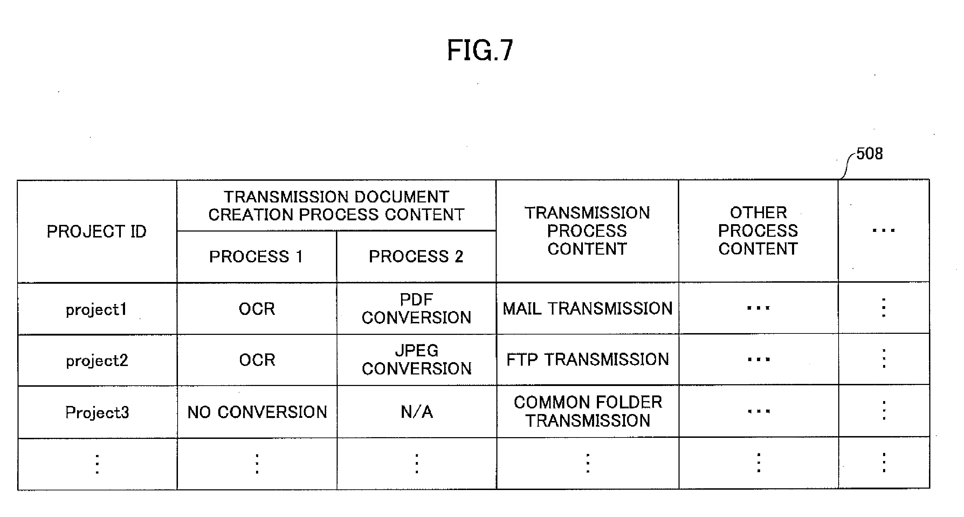

The transmission document creating unit 504 executes a transmission document creation process based on a project ID, on the scan document included in the transmission process execution request, by referring to the specified project information storage unit 508 illustrated in FIG. 7. FIG. 7 illustrates an example of information stored in the project information storage unit 508 of the transmission control server 50 according to the embodiment of the present invention. As illustrated in FIG. 7, the project information storage unit 508 includes a "project ID", a "transmission document creation process content", a "transmission process content", and an "other process content". The "project ID" is identification information for uniquely identifying a project. The "transmission document creation process content" is information indicating the process content for creating a transmission document from the received scan document. The "transmission process content" is information indicating the method of transmitting the created transmission document. The "other process content" is the process content that can be arbitrarily set by the administrator, etc., of the transmission system 1 for each project. Based on the example of FIG. 7, for example, when the project ID included in the transmission process execution request is "project1", the transmission document creating unit 504 performs an OCR process on the received scan document, and then performs PDF conversion, to create the transmission document. Then, the created transmission document is transmitted by mail by the transmission control unit 505 described below.

Referring back to FIG. 5, after creating the transmission document, when information indicating the pre-transmission confirmation process content (preview display, confirm request source) is specified, the transmission document creating unit 504 requests the transmission process execution status/result notifying unit 506 described below to send a transmission document creation result indicating whether the process of creating the transmission document is successful or unsuccessful. On the other hand, when the pre-transmission confirmation process content is not set, the transmission document creating unit 504 requests the transmission control unit 505 to transmit the created transmission document.

The transmission control unit 505 transmits the created transmission document based on the specified project ID and the transmission process content stored in the project information storage unit 508. When an instruction to transmit the transmission document given by the transmission document creating unit 504 or a transmission instruction based on the transmission process continuation request from the transmission process execution request receiving unit 503 is received, the transmission control unit 505 transmits the transmission document.

The transmission process execution status/result notifying unit 506 sends the transmission document creation result and the transmission process execution result to the image forming apparatus 20. The transmission document creation result includes information indicating whether the creation of the transmission document is successful or unsuccessful, a job ID, and a preview image or a transmission process execution confirmation screen URL. When a pre-transmission confirmation process content indicating preview display is specified, the transmission process execution status/result notifying unit 506 requests the preview image generating unit 507 to perform a process of generating a preview image based on the transmission document. Furthermore, when a pre-transmission confirmation process content indicating request source confirmation is specified, the transmission process execution status/result notifying unit 506 issues a URL of a transmission process execution confirmation screen including information of the transmission document. The transmission process execution result includes information indicating whether the process of transmitting the transmission document is successful or unsuccessful and a job ID.

The preview image generating unit 507 generates a preview image from the transmission document, based on an instruction from the transmission process execution status/result notifying unit 506.

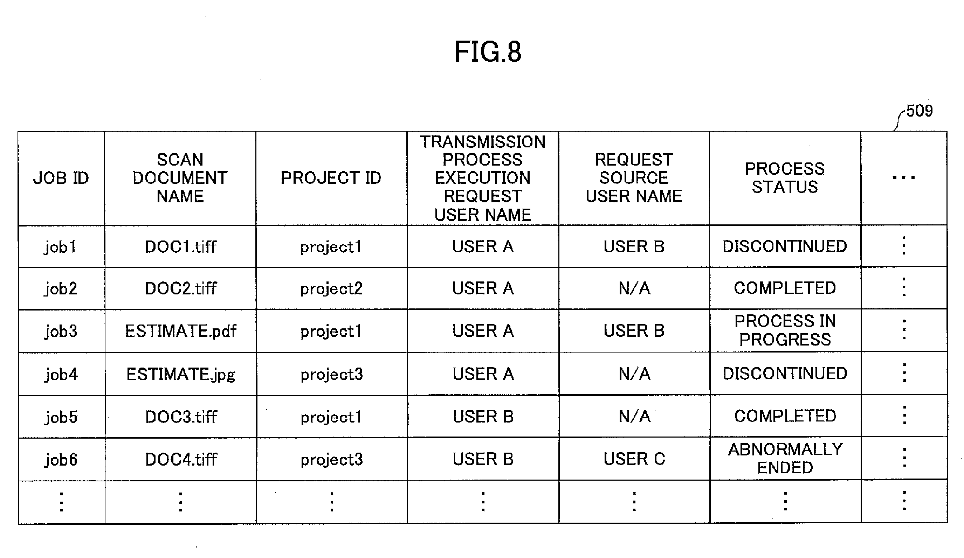

The job process status storage unit 509 stores the process status of the transmission process of each job (job ID) as illustrated in FIG. 8. FIG. 8 illustrates an example of information stored in the job process status storage unit 509 of the transmission control server 50 according to the embodiment of the present invention. As illustrated in FIG. 8, the job process status storage unit 509 includes a "job ID", a "scan document name", a "project ID", a "transmission process execution request user name", a "request source user name", and a "process status". The "job ID" is identification information for uniquely identifying a job, which is applied when a transmission process execution request is received. As the "scan document name", the name and the extension of the scan document included in the transmission process execution request are set. The "project ID" is a project ID included in the transmission process execution request. The "transmission process execution request user name" is the user name of the user who has made the transmission process execution request included in the transmission process execution request. The "request source user name" is the request source user name included in the transmission process continuation request, which is set when the pre-transmission confirmation process content of confirming the request source is specified and the request source user has given an instruction to continue the transmission process. The "process status" is information indicating the execution status of the transmission process. When a job has "discontinued" indicated in the "process status", it means that the transmission document has been created but has not yet been transmitted. When a job has "completed" indicated in the "process status", it means that transmission of the transmission document has been completed. When a job has "process in progress" indicated in the "process status", it means that the transmission document is being created or the transmission is in progress. When a job has "abnormally ended" indicated in the "process status", it means that the job has ended without being normally processed.

Referring back to FIGS. 5A and 5B, the following description is given.

### Management Server

The management server 30 includes an image forming apparatus connection unit 301, an authentication server connection unit 302, a mail transmission unit 303, a Web UI unit 304, an authentication processing unit 305, a confirmation mail transmission processing unit 306, a job operation state management unit 307, a user information storage unit 308, and a job operation information storage unit 309. The respective functions are realized as the CPU executes programs and cooperates with the hardware.

The image forming apparatus connection unit 301 controls the communication I/F 1007, and sends and receives data with the image forming apparatus 20.

The authentication server connection unit 302 controls the communication I/F 1007, and sends and receives data with the authentication server 40.

The mail transmission unit 303 controls the communication I/F 1007, and sends and receives data with the mail server 60.

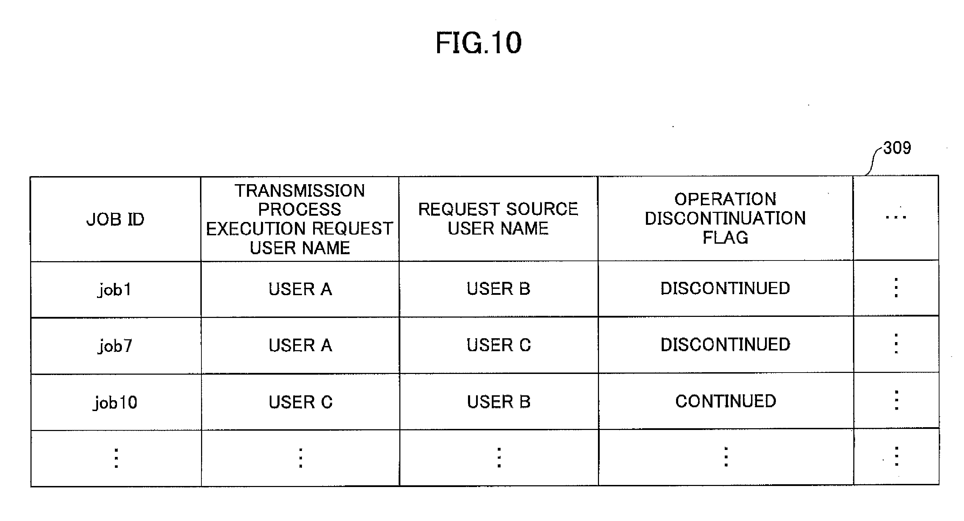

The Web UI unit 304 provides a Web UI screen based on the transmission process execution confirmation screen URL, and receives, from the client terminal 10, an instruction to continue a transmission process of a job in a discontinued state. Then, the Web UI unit 304 rewrites, via the job operation state management unit 307, the operation discontinuation flag stored in the job operation information storage unit 309 described below with reference to FIG. 10, from "discontinued" to "continued".

When an authentication request sent from the image forming apparatus 20 is received, the authentication processing unit 305 transfers the received authentication request to the authentication server 40. Then, the authentication processing unit 305 receives the authentication result sent from the authentication server 40, and sends the authentication result to the image forming apparatus 20.

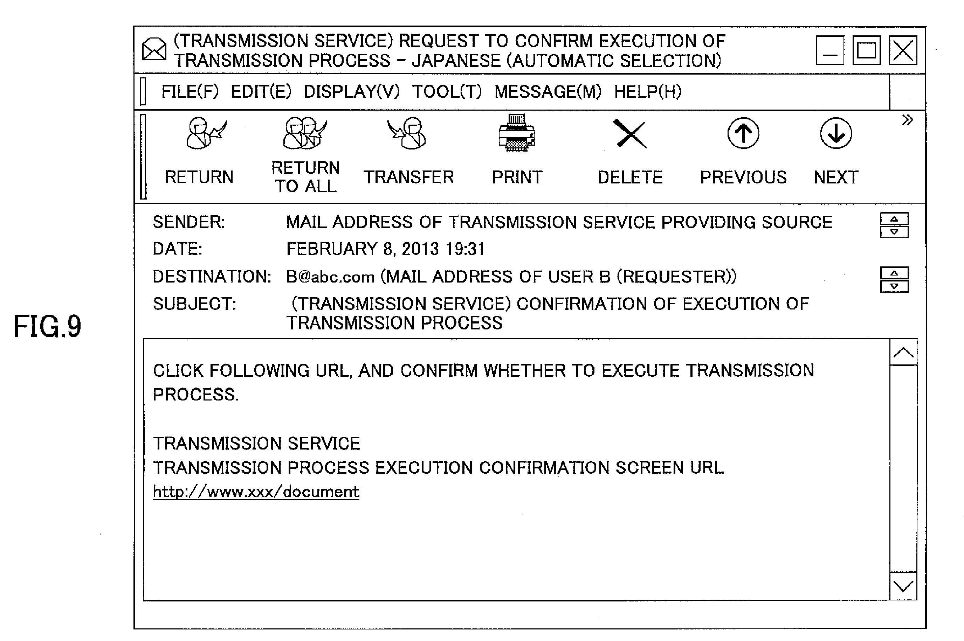

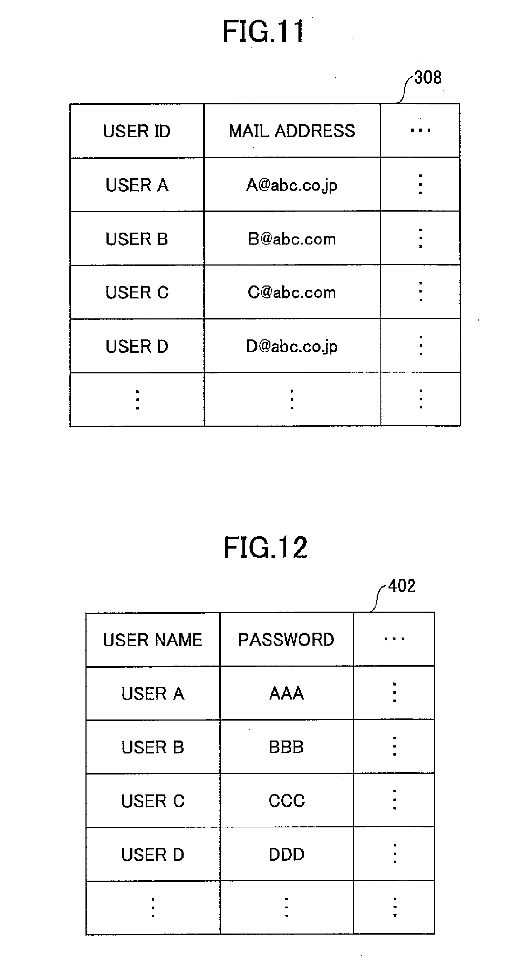

When a confirmation mail transmission request sent from the image forming apparatus 20 is received, the confirmation mail transmission processing unit 306 generates a confirmation mail as illustrated in FIG. 9, in which a transmission process execution confirmation screen URL, specifying the request source user included in the confirmation mail transmission request as the destination, is described in the mail main text. FIG. 9 illustrates an example of a confirmation mail sent to the request source according to the embodiment of the present invention. Note that when the user name of the request source user is specified in the confirmation mail transmission request, the confirmation mail transmission processing unit 306 acquires a mail address corresponding to the user name from the user information storage unit 308 illustrated in FIG. 11 described below, and sets the mail address as the destination address. When the mail address of the request source user is specified in the confirmation mail transmission request, the mail address is directly set as the destination address. Then, the confirmation mail transmission processing unit 306 sends the confirmation mail to the request source user via the mail server 60.

The job operation state management unit 307 uses the job operation information storage unit 309 illustrated in FIG. 10 to store the operation information of the job. FIG. 10 illustrates an example of information stored in the job operation information storage unit 309 of the management server according to the embodiment of the present invention. As illustrated in FIG. 10, the job operation information storage unit 309 stores, in association with the "job ID", a "transmission process execution requesting user name" of the user who made the transmission process execution request, a "request source user name", and an "operation discontinuation flag" indicating a discontinuation state or a continuation instruction of a job. The information stored in the job operation information storage unit 309 is set after the confirmation mail transmission request from the image forming apparatus 20 is received, and the "operation discontinuation flag" is changed from "discontinued" to "continued" based on a connection instruction given via the Web UI unit 304.

As illustrated in FIG. 11, the user information storage unit 308 stores the user name and the mail address of the user in association with each other. FIG. 11 illustrates an example of information stored in the user information storage unit 308 of the management server 30 according to the embodiment of the present invention. In the user information storage unit 308, the user name and mail address of users using the transmission service are registered in advance, and the user name and mail address of the request source are included.

### Authentication Server

The authentication server 40 includes an authentication determining unit 401 and an authentication information storage unit 402. The respective functions are realized as the CPU executes programs and cooperates with the hardware.

When an authentication request is received from the image forming apparatus 20 via the management server 30, the authentication determining unit 401 refers to the authentication information storage unit 402 illustrated in FIG. 12, and performs an authentication determining process. FIG. 12 illustrates an example of information stored in the authentication information storage unit 402 of the authentication server 40 according to the embodiment of the present invention. As illustrated in FIG. 12, the authentication information storage unit 402 stores a password in association with a user name. The authentication determining unit 401 determines whether the user name and password included in the authentication request match the user name and password stored in the authentication information storage unit 402. Then, the authentication determining unit 401 sends to the image forming apparatus 20 via the management server 30, an authentication result indicating that the authentication is successful when the user name and password included in the authentication request match the user name and password stored in the authentication information storage unit 402, and an authentication result indicating that the authentication is unsuccessful when the user name and password included in the authentication request do not match the user name and password stored in the authentication information storage unit 402.

### Mail Server

The mail server 60 includes a mail transfer unit 601. The respective functions are realized as the CPU executes programs and cooperates with the hardware.

The mail transfer unit 601 sends a mail, which has been sent with the use of SMTP from the transmission source of the mail, as an e-mail to a mail box of the destination mail address. Then, the client terminal 10 uses, for example, POP3 (Post Office Protocol version3) or IMAP4 (Internet Message Access Protocol4), to receive a mail corresponding to its own mail address from the mail box.

### Charging Server

The charging server 70 includes a charge processing unit 701 and a charge information storage unit 702. The respective functions are realized as the CPU executes programs and cooperates with the hardware.

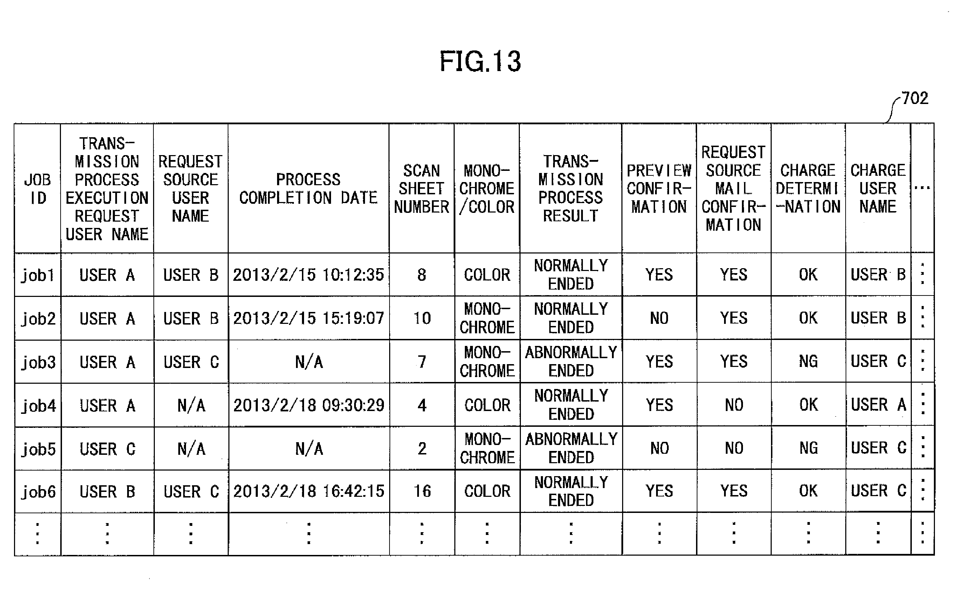

The charge processing unit 701 performs a charging process based on log information included in a charge process request sent from the image forming apparatus 20. The charge processing unit 701 stores the log information in the charge information storage unit 702. FIG. 13 illustrates an example of information stored in the charge information storage unit 702 of the charging server 70 according to the embodiment of the present invention. As illustrated in FIG. 13, in the charge information storage unit 702, "charge determination" and a "charge user name" are added to the information stored in the log information storage unit 215 illustrated in FIG. 6. "Charge determination" is set as "OK" indicating to perform charging, when the "transmission process result" is normally ended, and "charge determination" is set as "NG" indicating not to perform charging, when the "transmission process result" is not normally ended. As the "charge user name", a request source user name is set when a "request source user name" is set, and a "transmission process execution requesting user name" is set when a "request source user name" is not set. The "charge user name" is set by the charge processing unit 701.

Referring back to FIGS. 5A and 5B, the following description is given.

### Client Terminal

The client terminal 10 includes a mail receiving unit 101 and a process continuation instructing unit 102. The respective functions are realized as the CPU executes programs and cooperates with the hardware.

The mail receiving unit 101 uses POP3 or IMAP4, to receive a mail from the mail box of its own mail address of the mail server 60.

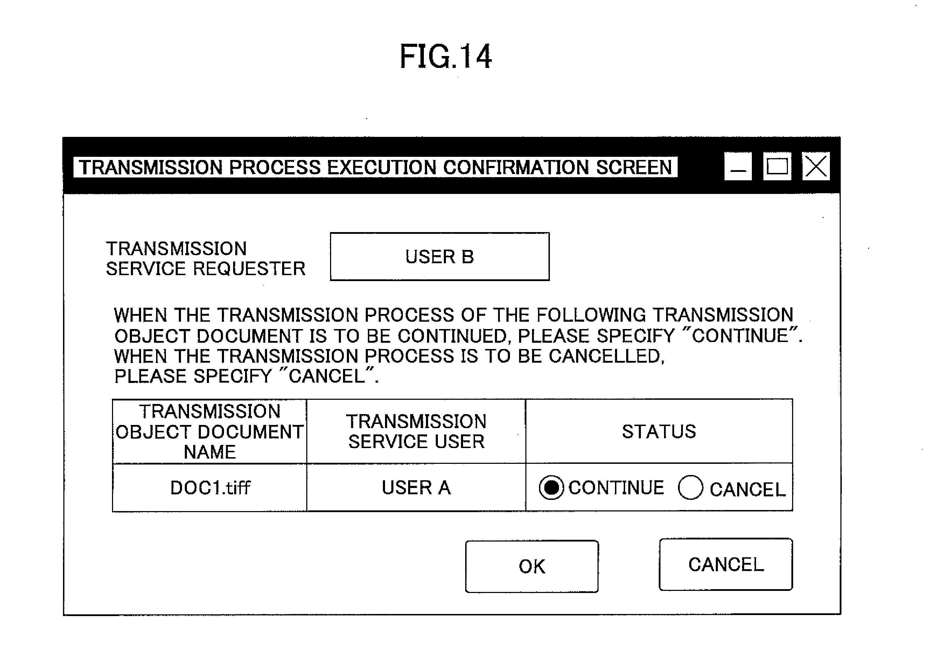

The process continuation instructing unit 102 notifies, to the management server 30, the contents specified by a user (requester) based on the transmission process execution confirmation screen illustrated in FIG. 14 that is displayed as the URL in a confirmation mail illustrated in FIG. 9 is clicked. FIG. 14 illustrates an example of a transmission process execution confirmation screen according to the embodiment of the present invention. As illustrated in FIG. 14, the transmission process execution confirmation screen displays a "status" including radio buttons for allowing a user who is the request source of the transmission service ("transmission service requester") to select whether to continue the transmission process of the transmission document ("transmission object document name"). Furthermore, in the "transmission service user" included in the transmission process execution confirmation screen, the user name of the user who made the request to execute the transmission process is set. When the user (requester) specifies either to continue or cancel in "status" and then presses the OK button, the process continuation instructing unit 102 sends a notification to the management server 30 including information indicating whether to continue or cancel the transmission process.

### Details of Process

Next, a detailed description is given of the process of the transmission system 1. The process of the transmission system 1 according to the embodiment of the present invention is roughly divided into the following (1) through (3).
(1) Log in process for using transmission system 1
(2) Process of executing transmission service (creation process and transmission process of transmission document)
(3) Charging process on transmission service In the following, the operations of (1) through
(3) are described based on a sequence diagram.

### (1) Log in process

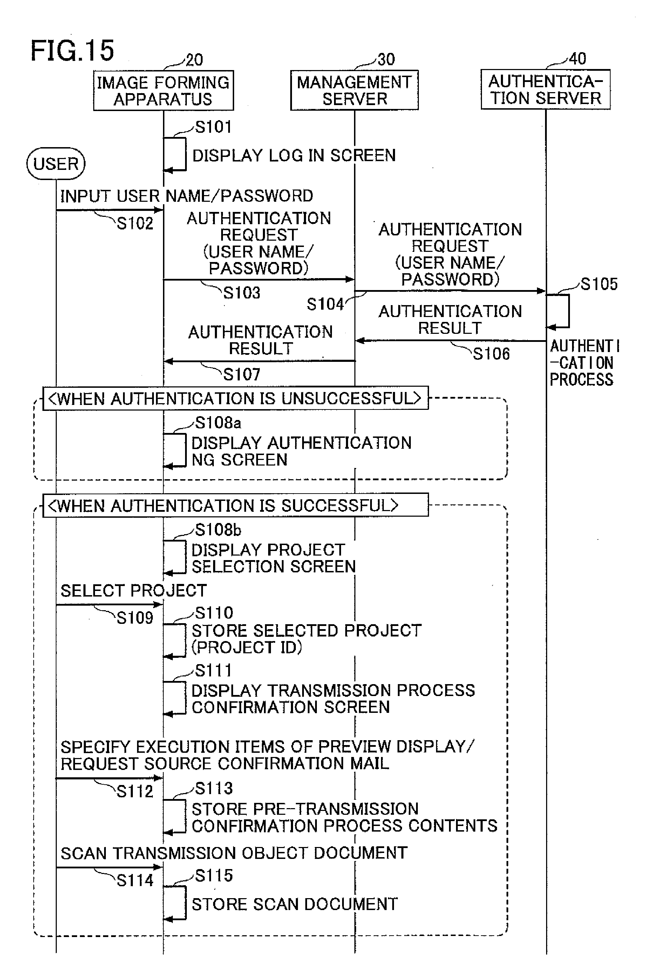

FIG. 15 is a sequence diagram of an example of operation procedures of the log in process of the transmission system 1 according to the embodiment of the present invention. Note that the log in process illustrated in FIG. 15 is an authentication process performed for using the transmission system 1, and when the authentication is successful, the transmission system 1 can be used.

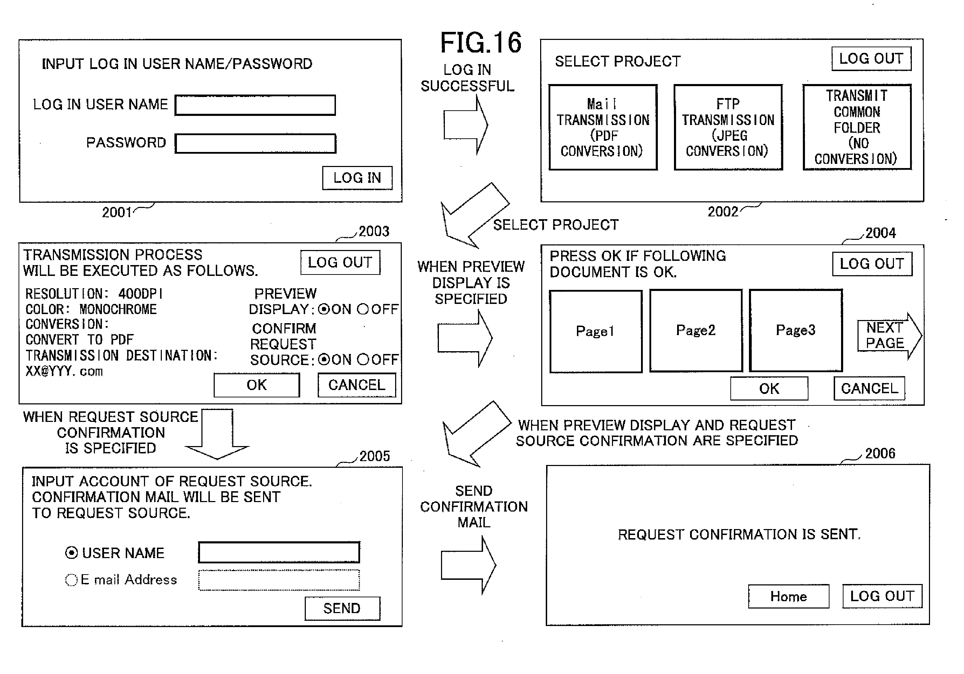

First, when an operation of the operation panel 232 by a user is received, the image forming apparatus 20 causes the operation panel 232 or an externally connected display to display a log in screen 2001 for using a transmission service illustrated in FIG. 16 (step S101). Note that the log in screen 2001 may be, for example, as an initial screen displayed after the image forming apparatus 20 is activated, instead of being displayed by operation by the user. FIG. 16 illustrates an example of a transmission service usage screen displayed on the image forming apparatus 20 according to the embodiment of the present invention, and the screen transition. The following descriptions of operation procedures are given also by referring to FIG. 16.

Referring back to FIG. 15, when the user inputs a user name and a password in the log in screen 2001, and then presses a log in button (step S102), the input receiving unit 201 requests the authentication request unit 206 to execute a log in process. The authentication request unit 206 sends, to the management server 30, an authentication request including the input user name and password (step S103).

When the authentication processing unit 305 of the management server 30 receives the authentication request, the authentication processing unit 305 transfers the received authentication request to the authentication server 40 (step S104).

When the authentication request is received, the authentication determining unit 401 of the authentication server 40 performs an authentication process based on the user name and password included in the received authentication request (step S105). Specifically, the authentication determining unit 401 first refers to the authentication information storage unit 402, reads, from the authentication information storage unit 402, a password corresponding to the user name included in the received authentication request, determines whether the password read from the authentication information storage unit 402 matches the password included in the authentication request, and performs an authentication process. When the user name and password match, the authentication determining unit 401 determines that the authentication is successful. On the other hand, when the user name and password do not match, the authentication determining unit 401 determines that the authentication is unsuccessful. Then, the authentication determining unit 401 sends, to the management server 30, the authentication result as a response to the authentication request (step S106).

When the authentication processing unit 305 of the management server 30 receives an authentication request response including the authentication result, the authentication processing unit 305 sends the received authentication result to the image forming apparatus 20 (step S107).

When the authentication result included in the authentication request response received by the authentication request unit 206 of the image forming apparatus 20 is information indicating unsuccessful, the display control unit 202 displays an authentication NG screen including information indicating that the authentication is unsuccessful (step S108a).

Meanwhile, when the authentication result included in the authentication request response received by the authentication request unit 206 of the image forming apparatus 20 is information indicating successful, the display control unit 202 displays a project selection screen 2002 for selecting a project to be used in the transmission service illustrated in FIG. 15 (step S108b). When the user selects a project that he wants to use in the project selection screen 2002 (step S109), the input receiving unit 201 temporarily stores the project ID corresponding to the selected project, in a memory device, etc., of the image forming apparatus 20 (step S110). Furthermore, the transmission destination, etc., of the transmission document may be specified after the user selects the project. When the project is selected, the display control unit 202 displays a transmission process execution confirmation screen 2003 illustrated in FIG. 15 (step S111). The transmission process execution confirmation screen 2003 includes pre-transmission confirmation process content specification radio buttons for specifying whether to execute a process of confirming with the user before the transmission document is transmitted. In the displayed transmission process execution confirmation screen 2003, the user confirms the contents for executing the transmission process (transmission destination, etc.), specifies a confirmation process to be executed with the pre-transmission confirmation process content specification radio button, and then presses the OK button (step S112). The input receiving unit 201 temporarily stores the specified pre-transmission confirmation process content in a memory device, etc., of the image forming apparatus 20 (step S113). Next, when the user instructs to execute a process of scanning a paper document that is the transmission object (step S114), the scanner unit 212 temporarily stores a scan document obtained by a scan process in a memory device, etc., and requests the transmission process execution request unit 207 to execute a transmission process. Subsequent processes are described with reference to FIGS. 17 through 19.

### (2) Process of executing transmission service (creation process and transmission process of transmission document)

Descriptions are given of the operation procedures of the execution process of a transmission service, divided into cases where the pre-transmission confirmation process content is specified and not specified, and divided into the types of the specified process content, in (2-1-1) through (2-1-3) below. Furthermore, in (2-2), the process procedures of the transmission control server 50 are described based on a flowchart.

### (2-1-1) When pre-transmission confirmation process content is not specified

FIG. 17 is a sequence diagram illustrating an example of operation procedures of a transmission service execution process (when pre-transmission confirmation process content is not specified) of the transmission system 1 according to the embodiment of the present invention.

The transmission process execution request unit 207 of the image forming apparatus 20 generates a transmission process execution request based on an instruction from the scanner unit 212, and sends the transmission process execution request to the management server 30. The transmission process execution request includes a user name, a scan document, a project ID, and a pre-transmission process content indicating that there is no specification (step S201).

When the transmission process execution request receiving unit 503 of the transmission control server 50 receives a transmission process execution request via the image forming apparatus connection unit 501, the transmission process execution request receiving unit 503 requests the transmission document creating unit 504 to execute a process of creating a transmission document. The transmission document creating unit 504 refers to the project information storage unit 508, and performs a conversion process, etc., on the scan document included in the transmission process execution request based on the specified project ID, and creates a transmission document (step S202). When the transmission document is created, the transmission document creating unit 504 determines whether there is a confirmation process specified in the pre-transmission confirmation process content included in the transmission process execution request (step S203). At this time, when a pre-transmission confirmation process is not specified, the transmission document creating unit 504 requests the transmission control unit 505 to send the created transmission document. The transmission control unit 505 sends the transmission document by a transmission method based on the project ID (step S204). When the transmission method is mail transmission, a destination address specified for the user is set, and the mail to which the transmission document is attached is sent to the mail server 60. Note that depending on the specified project, the transmission document may be sent to a predetermined folder by FTP.

The mail transfer unit 601 of the mail server 60 transfers the mail to the specified destination address (step S205), and sends a transmission result of the transmission document to the transmission control server 50 (step S206).

The transmission process execution status/result notifying unit 506 of the transmission control server 50 sends a transmission process execution result including a job ID to the image forming apparatus 20 (step S207).

### (2-1-2) When pre-transmission confirmation process content (preview display) is specified

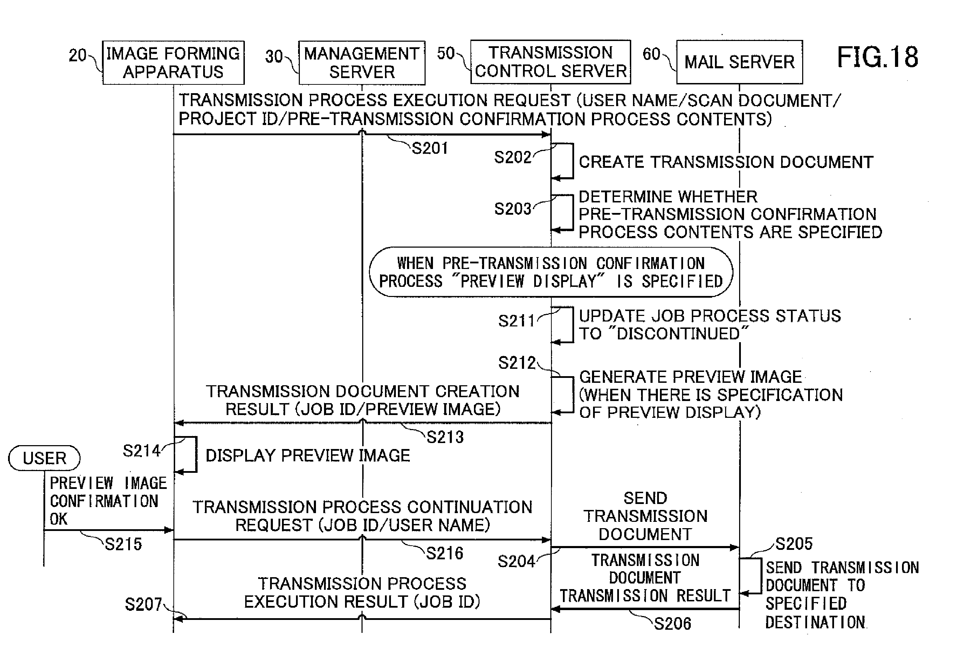

FIG. 18 is a sequence diagram illustrating an example of operation procedures of a transmission service execution process (when preview display is specified as pre-transmission confirmation process content) of the transmission system 1 according to the embodiment of the present invention. That is to say, in FIG. 18, preview display is specified as the pre-transmission confirmation process in the transmission process execution request. Note that in FIG. 18, the same processes as those of FIG. 17 are denoted by the same step numbers and detailed descriptions are omitted.

In the determination process (step S203) by the transmission document creating unit 504, preview display is specified in the pre-transmission confirmation process content, and therefore it is determined that there is a specification of a pre-transmission confirmation process content. Next, the process status of the job process status storage unit 509 corresponding to the job ID is changed to "discontinued" (step S211). Then, the preview image generating unit 507 generates a preview image based on the created transmission document (step S212). Note that the preview image may be created by reducing the resolution of the transmission document or embedding information by which a copy process is prevented. When a preview image is generated, the transmission process execution status/result notifying unit 506 sends the transmission document creation result including the job ID and the preview image, to the image forming apparatus 20 (step S213).

The transmission process execution status/result receiving unit 208 of the image forming apparatus 20 that has received the transmission document creation result stores the preview image included in the transmission document creation result in the preview image storage unit 209, and causes the display control unit 202 to display a preview image display screen 2004 illustrated in FIG. 16 (step S214).

When the user confirms the contents of the transmission document to be transmitted in the preview image display screen 2004, and then presses the OK button (step S215), the input receiving unit 201 requests the transmission process execution request unit 207 to execute the sending of a transmission process continuation request. The transmission process execution request unit 207 generates a transmission process continuation request including a job ID and a user name, and sends the transmission process continuation request to the transmission control server 50 via the transmission control server connection unit 204 (step S216).

When the transmission process execution request receiving unit 503 of the transmission control server 50 receives the transmission process continuation request via the image forming apparatus connection unit 501, the transmission process execution request receiving unit 503 requests the transmission control unit 505 to execute a transmission process of the transmission document corresponding to the job ID whose process is discontinued. The subsequent processes of steps S204 through S207 are the same as the processes of FIG. 17.

By the above operation procedures, the transmission system 1 causes the image forming apparatus 20 to display a preview image indicating the contents of the transmission document created by the transmission control server 50, and based on the confirmation of the preview image by the user, the transmission document is transmitted.

Accordingly, the user can use the transmission service upon confirming whether the contents of the transmission document complies with the user's intentions. Therefore, it is possible to reduce the danger of a fee being unintentionally charged for a transmission service where a document unintended by the user is transmitted, and the danger of information leakage.

### (2-1-3) When pre-transmission confirmation process content (confirmation of request source) is specified

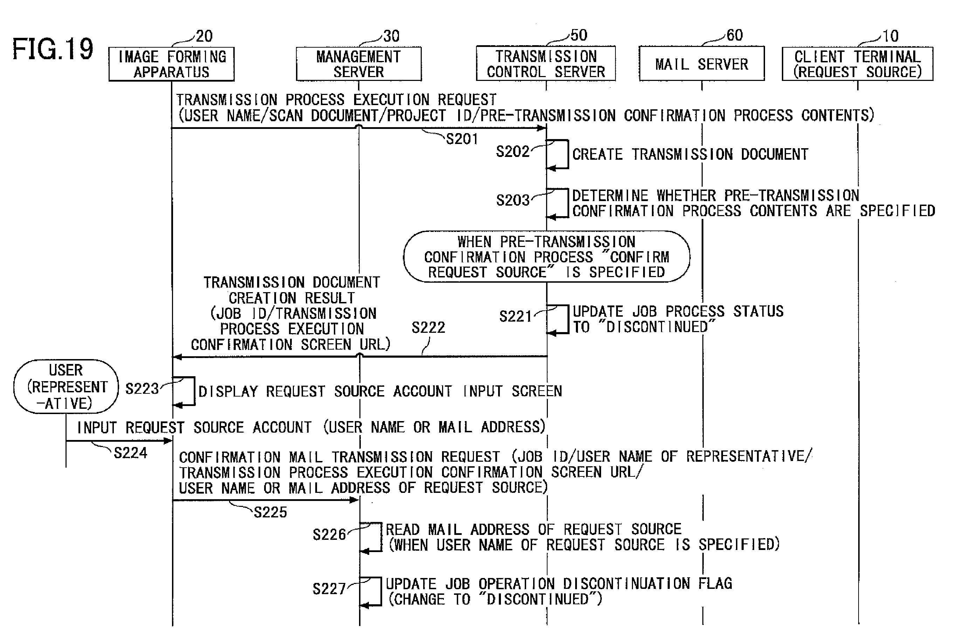

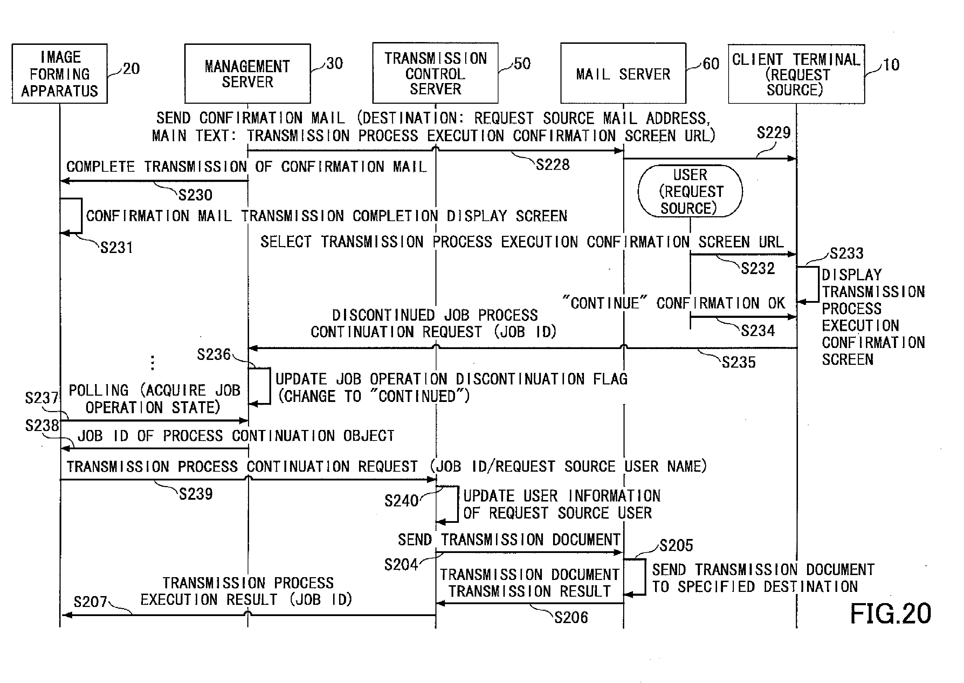

FIGS. 19 and 20 are a sequence diagram (part 1, part 2) illustrating an example of operation procedures of a transmission service execution process (when confirmation of request source is specified as pre-transmission confirmation process content) of the transmission system 1 according to the embodiment of the present invention. That is to say, in FIGS. 19 and 20, confirmation of request source is specified as the pre-transmission confirmation process in the transmission process execution request, and there is a user who is the request source instructing the usage of the transmission service to a user (representative) who performs the operation of using the transmission service. Note that in FIGS. 19 and 20, the same processes as those of FIG. 17 are denoted by the same step numbers and detailed descriptions are omitted.

First, a description is given with reference to FIG. 19. In a determination process performed by the transmission document creating unit 504 (step S203), request source confirmation is specified in the pre-transmission confirmation process contents, and therefore it is determined that there is a specification of a pre-transmission confirmation process content. Next, the process status of the job process status storage unit 509 corresponding to this job ID is changed to "discontinued" (step S221). Then, the transmission process execution status/result notifying unit 506 sends, to the image forming apparatus 20, the transmission document creation result including the transmission process execution confirmation screen URL and the job ID issued by the transmission control unit 505 (step S222).

When the transmission document creation result including the transmission process execution confirmation screen URL is received, the transmission process execution status/result receiving unit 208 of the image forming apparatus 20 causes the display control unit 202 to display a request source account input screen 2005 illustrated in FIG. 16 (step S223).

When the user (representative) inputs, in the request source account input screen 2005, the user name or the e-mail address of the user who is the request source, and presses the send button (step S224), the input receiving unit 201 instructs the confirmation mail transmission request unit 210 to execute a confirmation mail transmission request for confirming with the request source whether to execute the transmission process. The confirmation mail transmission request unit 210 generates a confirmation mail transmission request including a job ID, the user name of the representative, the transmission process execution confirmation screen URL, and the user name or the mail address of the request source, and sends the confirmation mail transmission request to the management server 30 via the management server connection unit 203 (step S225).

When the confirmation mail transmission processing unit 306 of the management server 30 receives the confirmation mail transmission request via the image forming apparatus connection unit 301, and a user name of the request source is included in the confirmation mail transmission request, the confirmation mail transmission processing unit 306 refers to the user information storage unit 308, and reads the mail address corresponding to the user name of the request source (step S226). Next, the confirmation mail transmission processing unit 306 changes, via the job operation state management unit 307, the job operation discontinuation flag corresponding to the job ID included in the confirmation mail transmission request to "discontinued", which is stored in the job operation information storage unit 309 (step S227).

The description is continued with reference to FIG. 20. The confirmation mail transmission processing unit 306 sets the mail address of the request source in the destination address, and sends, to the mail server 60, a confirmation mail in which the transmission process execution confirmation screen URL is described in the main text (step S228). The mail server 60 sends the confirmation mail to the mail address of the request source (step S229).

Meanwhile, when the transmission of the confirmation mail to the mail server 60 is completed, the confirmation mail transmission processing unit 306 notifies the completion of the transmission of the confirmation mail to the image forming apparatus 20 (step S230), and the display control unit 202 of the image forming apparatus 20 displays a confirmation mail transmission completion display screen 2006 illustrated in FIG. 16 (step S231).

The user who is the request source operating the client terminal 10 makes a selection by clicking the transmission process execution confirmation screen URL described in the confirmation mail (step S232), to cause the web browser included in the client terminal 10 to display the transmission process execution confirmation screen illustrated in FIG. 14 (step S233). Then, when the user selects "continue" in the transmission process execution confirmation screen and presses the OK button (step S234), the process continuation instructing unit 102 sends, to the management server 30, a discontinued job process continuation request for continuing the job whose process is discontinued at the management server 30 (step S235).

When the web UI unit 304 of the management server 30 receives the discontinued job process continuation request, the web UI unit 304 changes the job operation discontinuation flag corresponding to the job ID that is the object of the continuation request stored in the job operation information storage unit 309, to "continued" (step S236).

The job operation state acquiring unit 211 of the image forming apparatus 20 performs polling with respect to the management server 30 at a predetermined cycle, and requests to acquire the operation state of each job stored in the management server 30 (step S237).

The job operation state management unit 307 of the management server 30 sends, to the image forming apparatus 20, the job ID of the job whose operation discontinuation flag is indicating continued, in the job operation information storage unit 309 (step S238).

When the job operation state acquiring unit 211 of the image forming apparatus 20 acquires the information of a job whose operation discontinuation flag is indicating continued, the job operation state acquiring unit 211 instructs the transmission process execution request unit 207 to send the transmission process continuation request. The transmission process execution request unit 207 sends, to the transmission control server 50, the transmission process continuation request including the job ID for which an instruction to continue processing has been received and the user name of the request source (step S239).

When the transmission process execution request receiving unit 503 of the transmission control server 50 receives a transmission process continuation request, the transmission process execution request receiving unit 503 sets the user name of the request source included in the transmission process continuation request, as the request source user name to be stored in the job process status storage unit 509 (step S240). The processes of the subsequent steps S204 through S207 are the same as those illustrated in FIG. 17.

By the above operation procedures, the transmission system 1 confirms with the user who is the request source to determine the execution of the transmission process, before the transmission document created by the transmission control server 50 is transmitted. Then, when the user who is the request source confirms the continuation of the transmission process, the transmission document is transmitted.

Accordingly, even when the user (representative) who performs the operation for using the transmission service and the user (requester) who gives the instruction to the representative are different, the transmission service is executed upon attaining permission from the requester. Therefore, for example, when a fee is charged for the transmission service, the fee is not charged to the representative, but the fee is charged to the requester.

Note that when preview display and request source confirmation are specified in the pre-transmission confirmation process contents, the transmission document creation result sent from the transmission control server 50 to the image forming apparatus 20 includes a preview image and a transmission process execution confirmation screen URL. Furthermore, when the transmission control server 50 receives a transmission process continuation request sent from the image forming apparatus 20 after confirming the preview image and confirming the request source user, the transmission document is transmitted.

Note that as a method of confirming the request source according to the embodiment of the present invention, an e-mail including a URL of the web UI screen used by the request source for confirming the execution (continuation) of the transmission process is sent; however, for example, the transmission process execution confirmation screen may be controlled to be displayed by installing an application for the transmission service in the client terminal 10, and using the installed application.

### (2-2) Process procedures at transmission control server

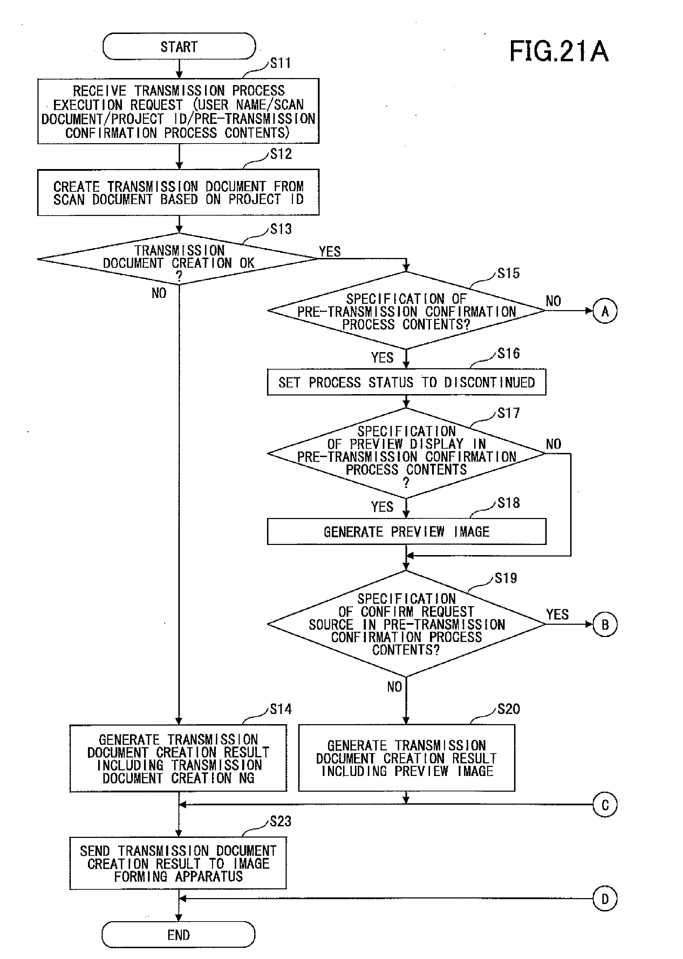

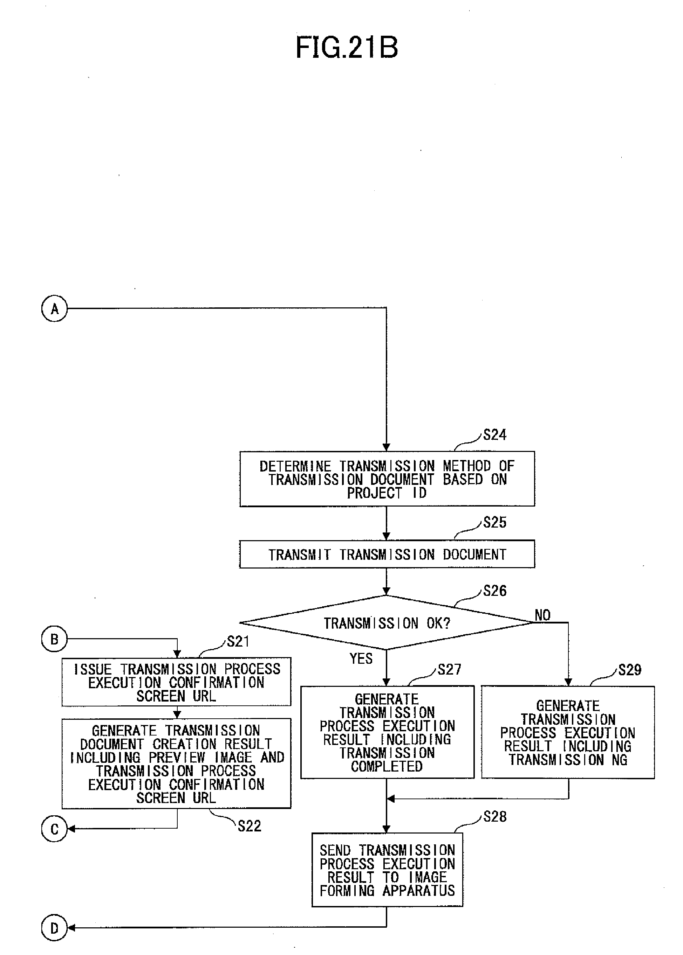

FIGS. 21A and 21B are a flowchart illustrating an example of process procedures of the transmission control server 50 according to the embodiment of the present invention.

First, the transmission process execution request receiving unit 503 of the transmission control server 50 receives a transmission process execution request including a user name, a scan document, a project ID and a pre-transmission confirmation process content (step S11).

Next, the transmission document creating unit 504 creates a transmission document from the scan document, by referring to the project information storage unit 508, based on the project ID included in the received transmission process continuation request (step S12). It is determined whether the transmission document has been normally (properly) created in this creation process (step S13). Note that a case where the transmission document is not normally created is when, for example, an OCR process or a file conversion process (PDF conversion, etc.) has not been normally completed.

When the creating of the transmission document is unsuccessful (NO in step S13), the transmission process execution status/result notifying unit 506 generates a transmission document creation result including information indicating that the creating of the transmission document is unsuccessful (step S14).

Meanwhile, when the creating of the transmission document is successful (YES in step S13), it is determined whether a pre-transmission confirmation process is specified in the pre-transmission confirmation process contents included in the transmission process execution request (step S15).

When a pre-transmission confirmation process is specified (YES in step S15), the process status stored in the job process status storage unit 509 is set to discontinued (step S16), and it is determined whether preview display is specified in the pre-transmission confirmation process contents (step S17).

When preview display is specified in the pre-transmission confirmation process contents (YES in step S17), the preview image generating unit 507 generates a preview image from the created transmission document (step S18).

Next, it is determined whether request source confirmation is specified in the pre-transmission confirmation process contents (step S19). Note that when preview display is not specified in the pre-transmission confirmation process contents (NO in step S17), the process of step S18 is not executed, and the process of step S19 is executed.

When the request source confirmation is not specified in the pre-transmission confirmation process content (NO in step S19), a transmission document creation result including a preview image is generated (step S20).

Meanwhile, when the request source confirmation is specified in the pre-transmission confirmation process content (YES in step S19), a transmission process execution confirmation screen URL is issued (step S21), and a transmission document creation result including a preview image and the transmission process execution confirmation screen URL is generated (step S22).

Then, the transmission process execution status/result notifying unit 506 sends the transmission document creation result generated in steps S14, S20, and S22 to the image forming apparatus 20 (step S23).

Meanwhile, in step S15, when a pre-transmission confirmation process is not specified in the pre-transmission confirmation process contents included in the transmission process execution request (NO in step S15), the transmission control unit 505 determines the method of transmitting the transmission document (mail transmission or FTP transmission, etc.) based on the project ID included in the transmission process execution request (step S24). Next, the transmission control unit 505 transmits the transmission document based on the determined transmission method (step S25).

It is determined whether the transmission of the transmission document is successful (step S25).

When the transmission of the transmission document is successful (YES in step S26), the transmission process execution status/result notifying unit 506 generates a transmission process execution result including information indicating that the transmission is completed (step S27), and sends the generated transmission process execution result to the image forming apparatus 20 (step S28).

Meanwhile, when transmission of the transmission document is unsuccessful (NO in step S26), the transmission process execution status/result notifying unit 506 generates a transmission process execution result including information indicating that the transmission is unsuccessful (step S29), and sends the generated transmission process execution result to the image forming apparatus 20 (step S28).

Note that when preview display and request source confirmation are specified in the pre-transmission confirmation process, the transmission control server 50, which has received the transmission process continuation request sent from the image forming apparatus 20 after confirmation by the user, executes the processes of step S24 and onward.

Note that the device that displays a preview display is not limited to the image forming apparatus 20; for example, the client terminal 10 used by the user who is the request source may display the preview image. This is realized by, for example, having a preview image displayed on the transmission process execution confirmation screen.

### (3) Charging process on transmission service

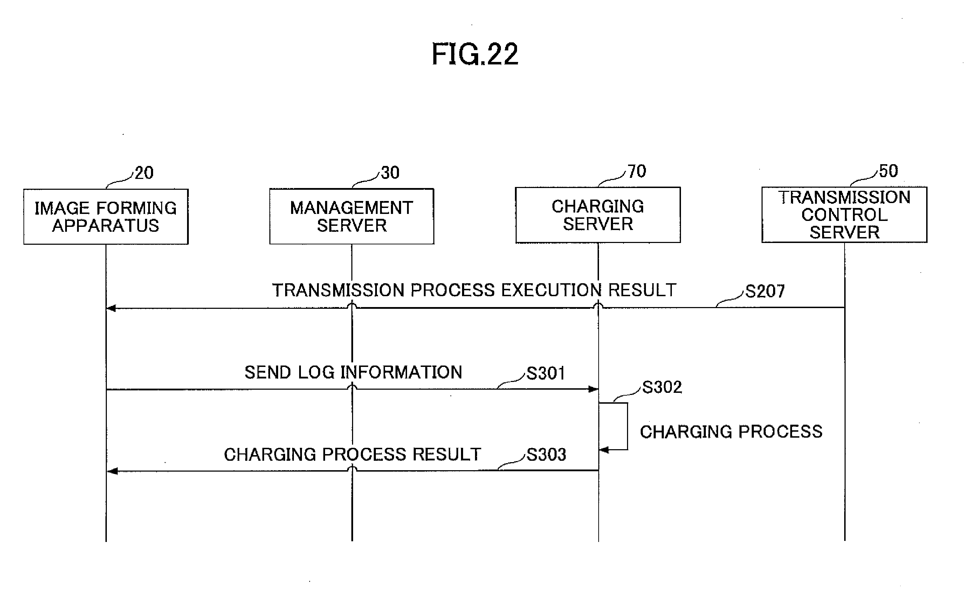

FIG. 22 is a sequence diagram of an example of operation procedures of the charging process of the transmission system 1 according to the embodiment of the present invention. FIG. 22 is the operation after the image forming apparatus 20 receives a transmission process execution result from the transmission control server 50 (step S207 in FIGS. 17 through 19).

When the transmission process execution status/result receiving unit 208 of the image forming apparatus 20 receives a transmission process execution result (step S207), the charging process request unit 214 of the image forming apparatus 20 acquires the log information stored in the log information storage unit 215 corresponding to the job ID included in the transmission process execution result, via the log information management unit 213. Then, the charging process request unit 214 generates a charging process request including the log information, and sends the charging process request to the charging server 70, and performs a charging process (step S301).

The charge processing unit 701 of the charging server 70 stores, in the charge information storage unit 702, the log information included in the received charging process request (step S302). The charging process determines whether the transmission service is a charging object, and specifies the user to be charged when the transmission service is a charging object. Then, the charge processing unit 701 notifies the result of the charging process to the image forming apparatus 20 (step S303). The result of the charging process includes information indicating the determination result as to whether the transmission service is a charging object, the user name of the user who is charged when the transmission service is a charging object, and the amount of the fee to be charged.

As described above, by the transmission system 1 according to the embodiment of the present invention, before transmitting a transmission document based on a transmission job, the user who has requested the execution of the transmission process (the image forming apparatus 20) can confirm whether to execute the transmission of the transmission document. Furthermore, the confirmation is done by having the user confirm whether to execute the transmission process based on a preview image generated based on the transmission document, and by displaying (providing) a screen for confirming whether to execute the transmission process to the request source that has instructed the usage of the transmission service to the user. Then, when the user (including the user who is the request source) confirms to execute the transmission process, the transmission system 1 can cause the transmission control server 50 to transmit the transmission document.

Accordingly, the user using the transmission service can use the transmission service upon confirming that the transmission document is what the user has intended, before the transmission service ends (before the transmission document is transmitted). Therefore, it is possible to avoid a situation where an unintended output result is obtained due to an erroneous operation of the user, and a situation where the service is excessively used.

Furthermore, by the transmission system 1 according to the embodiment of the present invention, when the user who is the request source confirms the execution of the transmission process, the user who is the request source is charged.

Accordingly, the fee can be appropriately charged to the user who is the request source that has received the benefit of using the transmission service, without charging the user who received an instruction from the user who is the request source.

### Modification

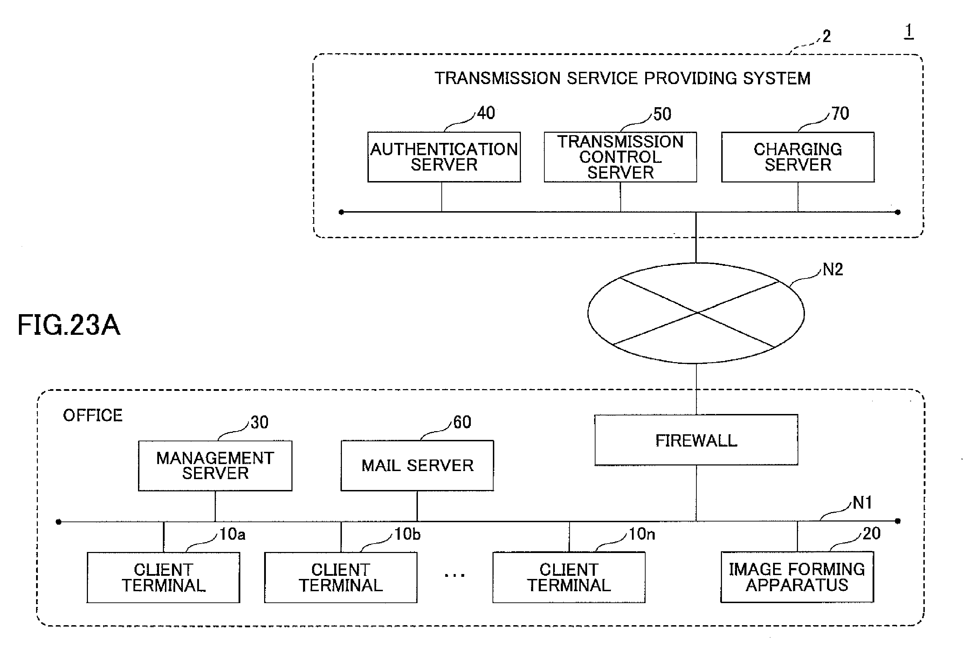

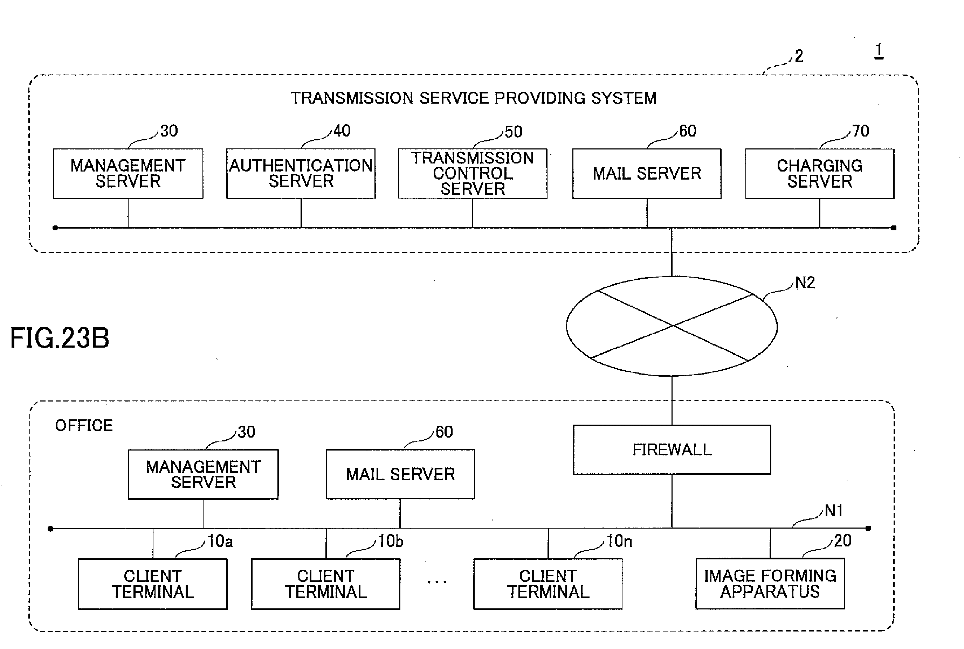

The transmission system 1 according to a modification of the embodiment of the present invention has a system configuration as illustrated in FIGS. 23A and 23B. FIGS. 23A and 23B are configuration diagrams of examples of the transmission system 1 according to a modification of the embodiment of the present invention. As illustrated in FIG. 23A, the transmission system 1 according to the modification includes, for example, client terminals 10a, 10b, ... 10n, the image forming apparatus 20, the management server 30, the mail server 60 connected to the network N1 that is a LAN of an office, for example. Furthermore, the transmission system 1 according to the modification includes the authentication server 40, the transmission control server 50, and the charging server 70, which are included in a transmission service providing system 2 for providing, for example, a cloud service, which is connected to a firewall of the network N1 via the network N2 that is the Internet. Note that as illustrated in FIG. 23B, the transmission system 1 according to the modification may have a configuration in which the management server 30 and the mail server 60 are included in the transmission service providing system 2.

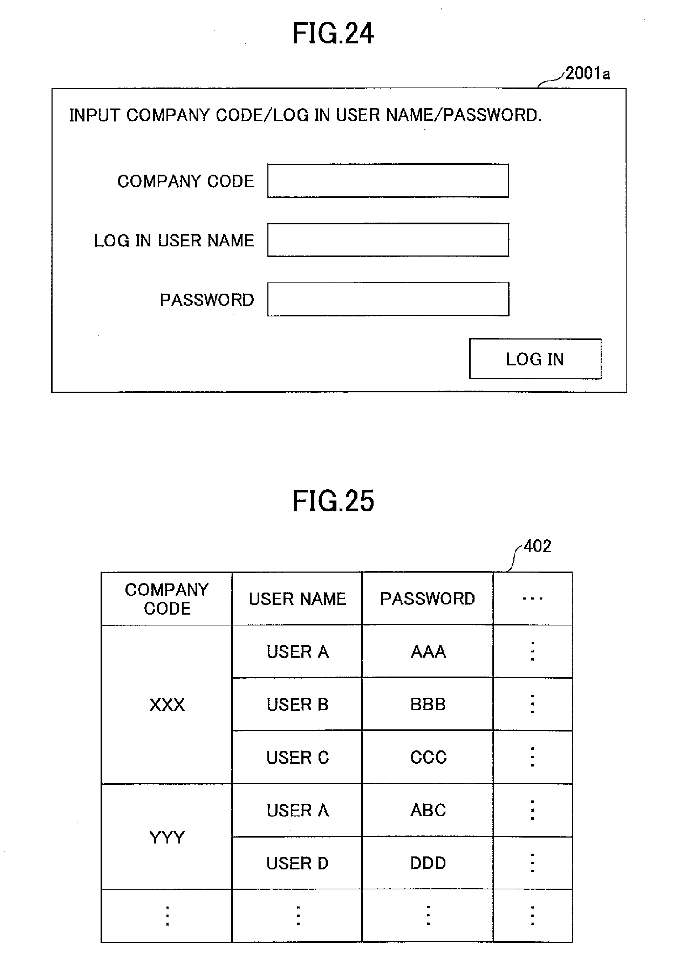

In the transmission system 1 according to the modification, when the user logs into the image forming apparatus 20, in addition to the user name and the password, the user inputs a company code for identifying the organization to which the user belongs. FIG. 24 illustrates an example of a log in screen displayed on the image forming apparatus 20 according to the modification of the embodiment of the present invention. In this login screen 2001a, the user inputs the company code of the organization (company, etc.) to which the user belongs, the user name, and the password. Furthermore, the authentication information storage unit 402 included in the authentication server 40 stores a company code, a user name, and a password in association with each other as illustrated in FIG. 25. When the company code, the user name, and the password input by the user and included in the authentication request match the company code, the user name, and the password stored in the authentication information storage unit 402, the authentication determining unit 401 determines that the authentication is successful. As described above, by adding information for identifying the organization such as a company code, the transmission service providing system 2 can provide a service to a plurality of locations (offices) of multiple different companies.

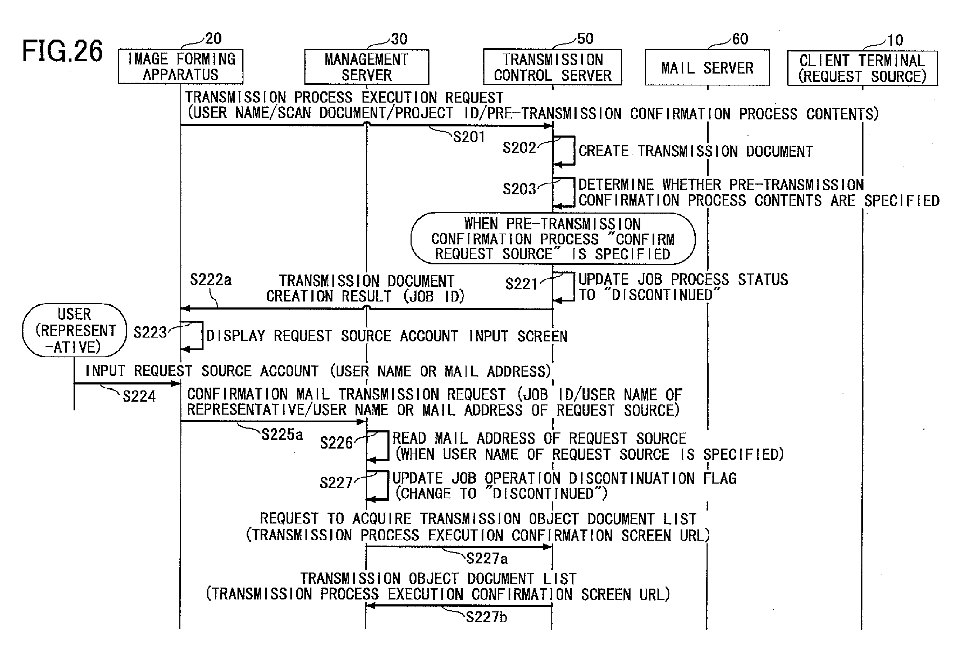

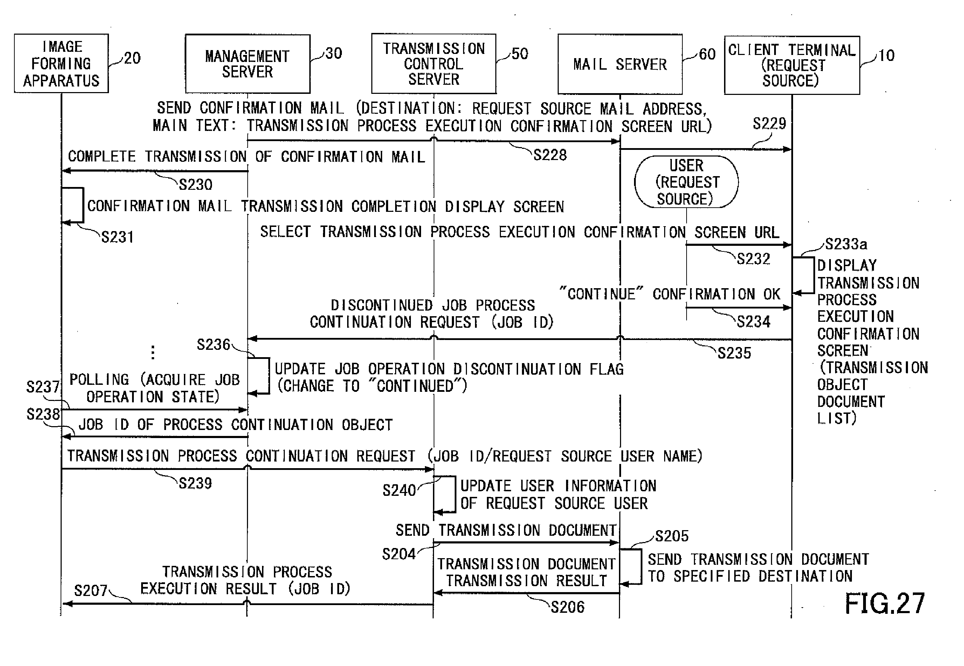

Furthermore, the operations of the transmission system 1 according to the modification are partially different from those of the embodiment of the present invention (see FIG. 19), in a case where request source confirmation is specified in the pre-transmission confirmation process contents. FIGS. 26 and 27 are sequence diagrams (part 1), (part 2) illustrating an example of operation procedures of a transmission service execution process of the transmission system 1 according to the modification of the embodiment of the present invention (in a case where the request source confirmation is specified in the pre-transmission confirmation process contents). Note that in FIGS. 26 and 27, the same processes as those of FIGS. 19 and 20 are denoted by the same step numbers and detailed descriptions are omitted.

In the case of the modification, the transmission document creation result sent from the transmission control server 50 to the image forming apparatus 20 includes a job ID (step S222a), and does not include a transmission process execution confirmation screen URL.

Furthermore, the confirmation mail transmission request sent from the image forming apparatus 20 to the management server 30 does not include a transmission process execution confirmation screen URL (step S225a).

Furthermore, in the modification, the management server 30 sends a transmission object document list acquisition request to the transmission control server 50 (step S227a). A transmission object document list acquisition request is a request for acquiring a transmission process execution confirmation screen URL which is a screen for confirming the execution of a transmission process to the request source. This screen displays all of the transmission object documents for which the user who is the request source has specified usage of a transmission service. Then, the transmission control server issues a transmission process execution confirmation screen URL and sends the transmission process execution confirmation screen URL to the management server 30 (step S227b).

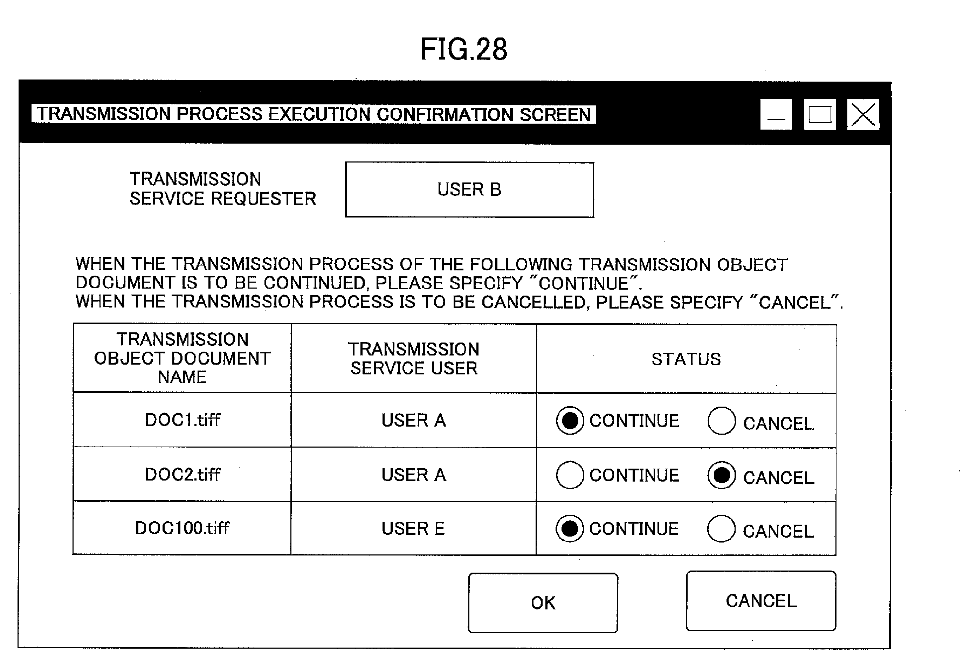

Furthermore, when a transmission process execution confirmation screen URL described in the main text of the confirmation mail is selected at the client terminal 10, a transmission process execution confirmation screen indicating a transmission object document list as illustrated in FIG. 28 is displayed (step S233a). FIG. 28 illustrates an example of a transmission process execution confirmation screen according to the modification of the embodiment of the present invention. As illustrated in FIG. 28, a plurality of transmission object documents for which the transmission service requester has given a request, are displayed.

As described above, by the transmission system 1 according to the modification of the embodiment of the present invention, even when the system configuration uses a cloud service, the same effects as those of the embodiment of the present invention can be attained.

Note that the transmission system 1 is not limited to a service for transmitting a transmission document created by performing a predetermined process on a scan document as described in the embodiment of the present invention; for example, the transmission system 1 is also applicable to a service for performing print output, for example.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

According to one embodiment of the present invention, a transmission control system, a transmission control method, and an information processing device are provided, by which a service intended by the user can be appropriately executed.

The transmission control system, the transmission control method, and the information processing device are not limited to the specific embodiments described herein, and variations and modifications may be made without departing from the spirit and scope of the present invention.

The transmission control system is a system having functions executed by the management server 30, the authentication server 40, the transmission control server 50, and the charging server 70. The confirming unit corresponds to the functions of the transmission process execution status/result notifying unit 506 and the preview image generating unit 507.

The transmission control system, the transmission control method, and the information processing device are based on and claims the benefit of priority of Japanese Priority Patent Application No. 2013-048378, filed on March 11, 2013, the entire contents of which are hereby incorporated herein by reference.

## Claims

1. A transmission control system including one or more devices for transmitting transmission data based on a transmission job received from an external device, the transmission control system comprising:
an image processing unit configured to create, based on the received transmission job, the transmission data by performing image processing on image data included in the transmission job;
a determining unit configured to determine whether the transmission job includes an instruction to make a confirmation as to whether to transmit the transmission data before transmitting the transmission data;
a confirming unit configured to confirm with a user whether to transmit the created transmission data before transmitting the transmission data, when the instruction to make the confirmation is included in the transmission job; and
a transmission control unit configured to transmit the transmission data when the user has confirmed to transmit the transmission data as a result of the confirmation by the confirming unit.

2. The transmission control system according to claim 1, wherein
the confirming unit requests the confirmation as to whether to transmit the transmission data by causing the external device to display a preview image generated based on the transmission data.

3. The transmission control system according to claim 1, wherein
the confirming unit requests the confirmation, to a user who is specified as a user of the external device, as to whether to transmit the transmission data.

4. The transmission control system according to claim 3, wherein
the confirming unit sends, to the user who is specified as the user of the external device, a mail including a URL of a confirmation screen used for confirming whether to transmit the transmission data.

5. The transmission control system according to claim 3, wherein
the confirming unit performs, based on pre-transmission confirmation process contents included in the instruction from the external device, at least one of requesting the confirmation based on a preview image generated based on the transmission data, and requesting the confirmation to the user who is specified as the user of the external device.

6. The transmission control system according to claim 3, further comprising:
a charging unit configured to charge a fee for a process of transmitting the transmission data, to the user who is specified as the user of the external device, when the user who is specified as the user of the external device has confirmed to transmit the transmission data.

7. A transmission control method executed by one or more devices included in a transmission control system for transmitting transmission data based on a transmission job received from an external device, the transmission control method comprising:
creating, based on the received transmission job by the one or more devices, the transmission data by performing image processing on image data included in the transmission job;
determining, by the one or more devices, whether the transmission job includes an instruction to make a confirmation whether to transmit the transmission data before transmitting the transmission data;
confirming with a user, by the one or more devices, as to whether to transmit the created transmission data before transmitting the transmission data, when the instruction to make the confirmation is included in the transmission job; and
transmitting, by the one or more devices, the transmission data when the user has confirmed to transmit the transmission data as a result of the confirming.

8. The transmission control method according to claim 7, wherein
the confirming includes requesting the confirmation as to whether to transmit the transmission data by causing the external device to display a preview image generated based on the transmission data.

9. The transmission control method according to claim 7, wherein
the confirming includes requesting the confirmation, to a user who is specified as a user of the external device, as to whether to transmit the transmission data.

10. The transmission control method according to claim 9, wherein
the confirming includes sending, to the user who is specified as the user of the external device, a mail including a URL of a confirmation screen used for confirming whether to transmit the transmission data.

11. The transmission control method according to claim 9, wherein
the confirming includes performing, based on pre-transmission confirmation process contents included in the instruction from the external device, at least one of requesting the confirmation based on a preview image generated based on the transmission data, and requesting the confirmation to the user who is specified as the user of the external device.

12. The transmission control method according to claim 9, further comprising:
charging a fee for a process of transmitting the transmission data, to the user who is specified as the user of the external device, when the user who is specified as the user of the external device has confirmed to transmit the transmission data.

13. An information processing device for transmitting transmission data based on a transmission job received from an external device, the information processing device comprising:
an image processing unit configured to create, based on the received transmission job, the transmission data by performing image processing on image data included in the transmission job;
a determining unit configured to determine whether the transmission job includes an instruction to make a confirmation as to whether to transmit the transmission data before transmitting the transmission data;
a confirming unit configured to confirm with a user whether to transmit the created transmission data before transmitting the transmission data, when the instruction to make the confirmation is included in the transmission job; and
a transmission control unit configured to transmit the transmission data when the user has confirmed to transmit the transmission data as a result of the confirmation by the confirming unit.

14. The information processing device according to claim 13, wherein
the confirming unit requests the confirmation as to whether to transmit the transmission data by causing the external device to display a preview image generated based on the transmission data.

15. The information processing device according to claim 13, wherein
the confirming unit requests the confirmation, to a user who is specified as a user of the external device, as to whether to transmit the transmission data.
